# EUROPEAN PATENT SPECIFICATION

(11) **EP 3 437 789 B1**
(45) Date of publication and mention of the grant of the patent: **22.07.2020**
(21) Application number: 17775505.5
(22) Date of filing: 30.03.2017
(51) Int. Cl.: B23K 35/28, C22C 21/08, C22C 21/12, C22C 21/14, C22C 21/16, C22F 1/043, C22F 1/047, C22F 1/057, B32B 15/01, C22C 21/02, C22F 1/04, C22F 1/05

(54) **ALUMINUM ALLOY CLADDING MATERIAL AND PRODUCTION METHOD FOR ALUMINUM ALLOY CLADDING MATERIAL**
VERKLEIDUNGSMATERIAL AUS ALUMINIUMLEGIERUNG UND HERSTELLUNGSVERFAHREN FÜR VERKLEIDUNGSMATERIAL AUS ALUMINIUMLEGIERUNG
MATÉRIAU DE REVÊTEMENT EN ALLIAGE D'ALUMINIUM ET PROCÉDÉ DE PRODUCTION DE MATÉRIAU DE REVÊTEMENT EN ALLIAGE D'ALUMINIUM

(30) Priority: 31.03.2016 JP 2016070762
(43) Date of publication of application: 06.02.2019
(73) Proprietor: Denso Corporation, Kariya-shi, Aichi 448-8661 (JP); UACJ Corporation, Tokyo 100-0004 (JP)
(72) Inventor: TERAMOTO Hayaki, Kariya-shi Aichi 448-8661 (JP); HASEGAWA Manabu, Kariya-shi Aichi 448-8661 (JP); YAMAMOTO Michiyasu, Kariya-shi Aichi 448-8661 (JP); NARITA Wataru, Tokyo 100-0004 (JP); KYOU Yoshihiko, Tokyo 100-0004 (JP); FUKUMOTO Atsushi, Tokyo 100-0004 (JP); OOYA Yoshiyuki, Tokyo 100-0004 (JP); UCHIDA, Yosuke, Aichi 4488661 (JP)
(74) Representative: v. Bezold & Partner Patentanwälte - PartG mbB
(86) International application number: PCT/JP2017/013491
(87) International publication number: WO 2017/170972

(56) References cited:
- EP-A1- 1 795 294
- WO-A1-2005/118899
- WO-A1-2015/107982
- WO-A1-2015/107982
- JP-A- H09 296 243
- JP-A- S63 297 536
- JP-A- 2011 195 892
- JP-A- 2012 030 244
- JP-A- 2014 055 339

## Description

### Technical Field

The present disclosure relates to an aluminum alloy clad material and a method for producing an aluminum alloy clad material.

### Background Art

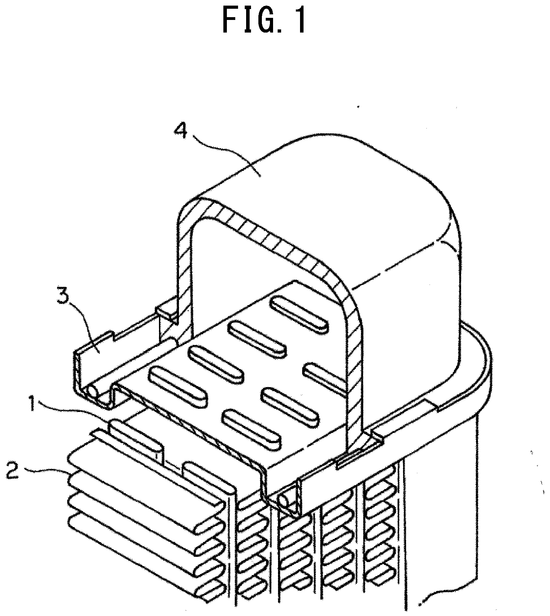

As illustrated in FIG. 1, a heat exchanger such as a radiator included in an automobile includes plural tubes 1 formed in a flat shape as well as fins 2 with a corrugated shape arranged between the tubes 1. The tubes 1 and the fins 2 are bonded to each other. Both ends of the tubes 1 are opened to spaces, respectively, configured by headers 3 and tanks 4. In the heat exchanger, a high-temperature refrigerant is fed from the space of one tank 4 to the space of the other tank 4 through the tubes 1 and subjected to heat exchange by the tubes 1 and the fins 2, and the refrigerant at a low temperature is circulated to an engine and the like.

A brazing sheet including an aluminum alloy clad material including a core material, an internal cladding material affixed to the core material, and a brazing filler material is typically used in the production of tubes 1 in such a heat exchanger. For example, an aluminum alloy material having a composition (Al-0.15 mass% Cu-1.1 mass% Mn) defined in JIS 3003 is used as the core material. When the brazing sheet is worked in the tubes 1, an aluminum alloy material having a composition (Al-1 mass% Zn) defined in JIS 7072 is affixed as the internal cladding material to the inner surfaces of the tubes 1, that is, surfaces that come into contact with a refrigerant. In addition, an aluminum alloy material having a composition (Al-10 mass% Si) defined in JIS 4045, or the like is typically affixed as the brazing filler material to the outer surfaces of the tubes 1. The tubes 1 are bonded, together with members such as the fins 2 worked in a corrugated shape, to each other by brazing. Examples of brazing methods include a flux brazing method and a Nocolok brazing method using a noncorrosive flux. The brazing is performed by heating each member to a temperature of around 600°C.

In recent years, reductions in the thicknesses of brazing sheets for the tubes 1 have been demanded for reducing the weights of heat exchangers, whereby high corrosion resistance has been demanded in the brazing sheets. In conventional sacrificial protection with Zn, the addition of Zn to an internal cladding material allows a potential to be lower, thereby resulting in an anticorrosive effect. However, since a corrosion rate is high in the internal cladding material to which Zn is added, a reduction in the thickness of a tube causes a sacrificial protection layer to be early consumed, thereby preventing target corrosion resistance from being obtained. Moreover, Zn added to a sacrificial anode material layer is expected to be exhausted in the future, and the establishment of a corrosion prevention technique in which the amount of Zn used is reduced by a method such as the control of the metal structure of the sacrificial protection material layer is demanded.

For such demands, Patent Literature 1 discloses use of a clad material in which a skin material layer of an Al-low Si alloy containing 1.5 to 3.0 mass% Si is arranged on at least one surface of a core material containing Mn. This is because an aluminum alloy for a heat exchanger in which Si-based precipitated particles with an appropriate size and density are dispersed in the skin material layer of the Al-low Si alloy by heat treatment after brazing is used as a brazing structure. It is disclosed that the precipitation of the Si-based particles results in a decrease in the amount of Si solid solution in the matrix of the skin material layer of the Al-low Si alloy and allows the skin material layer of the Al-low Si alloy to be baser than the core material, thereby exhibiting a corrosion prevention function. In other words, the Si-based precipitated particles are noble, and the Si-based precipitated particles themselves do not have the effect of sacrificial protection. Moreover, the Si-based precipitated particles promote the rate of corroding the matrix of the Al-low Si alloy skin material layer. Further, sufficient corrosion resistance may be prevented from being obtained in the clad material in a case in which the concentration of Si in the skin material exposed to a corrosive environment is too high.

Patent Literature 2 discloses a brazing sheet in which an element generating an intermetallic compound which is nobler than a matrix is contained in a sacrificial anode material, and the intermetallic compound which is nobler than the matrix is dispersed with an appropriate size and density. Corrosion resistance is improved by allowing a large number of intermetallic compounds which are nobler than the matrix of the sacrificial anode material to exist as local cathode points. However, the intermetallic compounds which are nobler than the matrix of the sacrificial anode material result in an increase in corrosion rate and therefore prevent an anticorrosive effect from being obtained.

A brazing sheet requires high strength as well as high corrosion resistance. There have been conventionally used design concepts that primarily, a material is strengthened by aging precipitation of Mg₂Si. Thus, a method of increasing the contents of Si and Mg in a core material has been used for enhancing strength. However, a melting point is decreased by increasing the content of Si in a core material. In view of brazing at a temperature of around 600°C, it is undesirable to increase the content of Si. Therefore, the higher strengths of tube materials have been in the present state of peaking out.

In contrast, Patent Literature 3 discloses use of an aluminum alloy brazing sheet clad with a brazing filler material including an aluminum alloy material containing Cu. By using, as the brazing filler material, the aluminum alloy material containing Cu, the melting point of the brazing filler material is decreased, whereby a brazing temperature can be allowed to be a low temperature of 570 to 585°C. As a result, the contents of Si and Cu in a core material can be increased, and a tube is enabled to have high strength. However, the addition of Cu to the brazing filler material enables the potential of the brazing filler material to be higher, thereby preferentially corroding the core material. Such a problem is addressed by the addition of an element allowing a potential to be lower, such as Zn, to the brazing filler material. However, the state of the presence of an intermetallic compound in the core material is unclear, and in some cases, the amounts of solid solution of Si and Cu may be decreased after brazing heating. In such cases, it is impossible to effectively exhibit aging strengthening after the brazing heating, and strength is also decreased.
Further aluminum alloy clad materials and aluminum alloy brazing sheets as well as methods for preparing the same are disclosed in Patent Literature 4-7.

### Citation List

### Patent Literature

Patent Literature 1: Japanese Patent Publication No. 2008-284558
Patent Literature 2: Japanese Patent Publication No. 2004-50195
Patent Literature 3: Japanese Patent Publication No. H7-207393
Patent Literature 4: WO 2015/107982 A1
Patent Literature 5: EP 1795294 A1
Patent Literature 6: JP S63 297536 A
Patent Literature 7: WO 2005/118899 A1

### Summary of Invention

### Technical Problem

The present disclosure was made in view of the problems described above, with an objective of providing: an aluminum alloy clad material that enables brazing at a temperature of around 600°C and has high strength and excellent corrosion resistance; and a method for producing an aluminum alloy clad material.

### Solution to Problem

In order to achieve the objective described above, the present invention provides an aluminum alloy clad material according to claims 1 and 5 as well as methods for preparing the same according to claims 2-4 and 6-8, respectively.
An aluminum alloy clad material according to a first aspect of the present disclosure includes: a core material comprising an aluminum alloy; and a sacrificial anode material layer clad on one surface or both surfaces of the core material, wherein
the core material includes an aluminum alloy including more than 0 mass% and less than 0.2 mass% Si, 0.05 to 0.30 mass% Fe, 1.0 to 2.5 mass% Cu, 1.0 to 1.6 mass% Mn, 0.1 to 1.0 mass% Mg, and the balance of Al and inevitable impurities;
the sacrificial anode material layer includes an aluminum alloy including 0.1 to 1.5 mass% Si, 0.1 to 2.0 mass% Mg, and the balance of Al and inevitable impurities;
in the core material, the number density of an Al-Mn-based intermetallic compound having an equivalent circle diameter of 0.1 µm or more is 1.0 × 10⁵ particles /mm² or more, and the number density of Al₂Cu having an equivalent circle diameter of 0.1 µm or more is 1.0 × 10⁵ particles /mm² or less; and
in the sacrificial anode material layer, the number density of a Mg-Si-based crystallized product having an equivalent circle diameter of 0.1 to 5.0 µm is 100 to 150,000 particles /mm², and the number density of a Mg-Si-based crystallized product having an equivalent circle diameter of more than 5.0 µm and 10.0 µm or less is 5 particles /mm² or less.

The core material may include an aluminum alloy further including one or more selected from the group consisting of 0.05 to 0.20 mass% Ti, 0.05 to 0.20 mass% Zr, 0.05 to 0.20 mass% Cr, and 0.05 to 0.20 mass% V.

The sacrificial anode material layer may include an aluminum alloy further including one or more selected from the group consisting of 0.05 to 1.00 mass% Fe, 0.05 to 1.00 mass% Ni, 0.05 to 1.00 mass% Cu, 0.05 to 1.50 mass% Mn, 0.05 to 1.00 mass% Zn, 0.05 to 0.20 mass% Ti, 0.05 to 0.30 mass% Zr, 0.05 to 0.30 mass% Cr, and 0.05 to 0.30 mass% V.

A method for producing an aluminum alloy clad material according to a second aspect of the present disclosure is a method for producing the aluminum alloy clad material, the method including:
a step of casting each of the aluminum alloy for the core material and the aluminum alloy for the sacrificial anode material layer; a homogenization treatment step of performing homogenization treatment of a cast ingot of the sacrificial anode material layer; a hot-rolling step of hot-rolling the ingot of the sacrificial anode material layer, subjected to the homogenization treatment, to have a predetermined thickness; a joining step of combining one surface or both surfaces of a core material ingot with the sacrificial anode material layer allowed to have the predetermined thickness by the hot rolling to form a joined material; a joining heating step of heating the joined material; a hot clad rolling step of hot-rolling the heated joined material; and a cold-rolling step of cold-rolling the hot-clad-rolled clad material,
wherein the rate of cooling an ingot surface by semi-continuous casting is set to 1°C/s or more in the step of casting the aluminum alloy for the sacrificial anode material layer; in the step of performing the homogenization treatment of the ingot of the sacrificial anode material layer, heat treatment of the ingot is performed at a temperature of 450 to 570°C for 1 hour or more; a heating temperature in the joining heating step is 420 to 550°C; and a retention time at 320 to 400°C is 6 minutes or less after the joining heating step.

The method further includes a homogenization treatment step of performing homogenization treatment of an ingot of the core material after the step of casting the core material, wherein heat treatment of the ingot of the core material may be performed at a temperature of 400 to 550°C in the homogenization treatment step.

The method further includes one or more annealing steps of annealing the clad material during or after the cold-rolling step, or during and after the cold-rolling step, wherein heat treatment of the clad material may be performed at a temperature of 200 to 320°C in the annealing steps.

An aluminum alloy clad material according to a third aspect of the present disclosure includes: a core material comprising an aluminum alloy; a sacrificial anode material layer clad on one surface of the core material; and a brazing filler material clad on the other surface of the core material, wherein
the core material includes an aluminum alloy including more than 0 mass% and less than 0.2 mass% Si, 0.05 to 0.30 mass% Fe, 1.0 to 2.5 mass% Cu, 1.0 to 1.6 mass% Mn, 0.1 to 1.0 mass% Mg, and the balance of Al and inevitable impurities;
the sacrificial anode material layer includes an aluminum alloy including 0.1 to 1.5 mass% Si, 0.1 to 2.0 mass% Mg, and the balance of Al and inevitable impurities;
the brazing filler material includes an Al-Si-based alloy including 7.0 to 12.0 mass% Si and the balance of Al and inevitable impurities;
in the core material, the number density of an Al-Mn-based intermetallic compound having an equivalent circle diameter of 0.1 µm or more is 1.0 × 10⁵ particles /mm² or more, and the number density of Al₂Cu having an equivalent circle diameter of 0.1 µm or more is 1.0 × 10⁵ particles /mm² or less; and
in the sacrificial anode material layer, the number density of a Mg-Si-based crystallized product having an equivalent circle diameter of 0.1 to 5.0 µm is 100 to 150,000 particles /mm², and the number density of a Mg-Si-based crystallized product having an equivalent circle diameter of more than 5.0 µm and 10.0 µm or less is 5 particles /mm² or less.

The core material may include an aluminum alloy further including one or more selected from the group consisting of 0.05 to 0.20 mass% Ti, 0.05 to 0.20 mass% Zr, 0.05 to 0.20 mass% Cr, and 0.05 to 0.20 mass% V.

The sacrificial anode material layer may include an aluminum alloy further including one or more selected from the group consisting of 0.05 to 1.00 mass% Fe, 0.05 to 1.00 mass% Ni, 0.05 to 1.00 mass% Cu, 0.05 to 1.50 mass% Mn, 0.05 to 1.00 mass% Zn, 0.05 to 0.20 mass% Ti, 0.05 to 0.30 mass% Zr, 0.05 to 0.30 mass% Cr, and 0.05 to 0.30 mass% V.

The brazing filler material may include an Al-Si-Cu-based alloy further including 0.5 to 2.5 mass% Cu.

The brazing filler material may include an Al-Si-Cu-Zn-based alloy further including 0.1 to 3.0 mass% Zn.

A method for producing an aluminum alloy clad material according to a fourth aspect of the present disclosure is a method for producing the aluminum alloy clad material, the method including:
a step of casting each of the aluminum alloy for the core material, the aluminum alloy for the sacrificial anode material layer, and the aluminum alloy for the brazing filler material; a homogenization treatment step of performing homogenization treatment of a cast ingot of the sacrificial anode material layer; a hot-rolling step of hot-rolling each of the ingot of the sacrificial anode material layer, subjected to the homogenization treatment, and an ingot of the brazing filler material to have a predetermined thickness; a joining step of combining each of one surface of a core material ingot with the sacrificial anode material layer allowed to have the predetermined thickness by the hot rolling and the other surface of the core material ingot with the brazing filler material allowed to have the predetermined thickness by the hot rolling to form a joined material; a joining heating step of heating the joined material; a hot clad rolling step of hot-rolling the heated joined material; and a cold-rolling step of cold-rolling the hot-clad-rolled clad material,
wherein the rate of cooling an ingot surface by semi-continuous casting is set to 1°C/s or more in the step of casting the aluminum alloy for the sacrificial anode material layer; in the step of performing the homogenization treatment of the ingot of the sacrificial anode material layer, heat treatment of the ingot is performed at a temperature of 450 to 570°C for 1 hour or more; a heating temperature in the joining heating step is 420 to 550°C; and a retention time at 320 to 400°C is 6 minutes or less after the joining heating step.

The method further includes a homogenization treatment step of performing homogenization treatment of an ingot of the core material after the step of casting the core material, wherein heat treatment of the ingot of the core material may be performed at a temperature of 400 to 550°C in the homogenization treatment step.

The method further includes one or more annealing steps of annealing the clad material during or after the cold-rolling step, or during and after the cold-rolling step, wherein heat treatment of the clad material may be performed at a temperature of 200 to 320°C in the annealing steps.

### Advantageous Effects of Invention

The aluminum alloy clad material according to the present disclosure has high strength and excellent corrosion resistance. In addition, the melting point of a core material included in the aluminum alloy clad material according to the present disclosure is high, and therefore, the aluminum alloy clad material can be brazed at a temperature of around 600°C.

### Brief Description of Drawings

FIG. 1 is an exploded perspective view illustrating a part of a conventional heat exchanger.

### Description of Embodiments

The present inventors found that Al-Cu-Mg-based aging precipitation in a core material can be utilized to the maximum by cladding the core material principally aimed at strengthening by an Al-Cu-Mg-based aging precipitated phase with a sacrificial anode material layer in which the density of a Mg-Si-based crystalline precipitate is set in a predetermined range. As a result, the present inventors found that an aluminum alloy clad material having high strength and excellent corrosion resistance can be obtained while inhibiting a decrease in the melting point of the core material.

An aluminum alloy clad material according to an embodiment of the present disclosure will be described below. Hereinafter, "mass% (% by mass)" in an alloy composition is simply referred to as "%".

### 1. Alloy Composition of Aluminum Alloy Clad Material

### 1-1. Design of Alloy Composition

In a conventional aluminum alloy clad material, the material is strengthened by allowing the aging precipitation of Mg₂Si to occur in a core material. However, since a large content of Si results in a decrease in the melting point of an aluminum alloy material, it is undesirable to increase the content of Si for the purpose of further strengthening the aluminum alloy material, in consideration of brazing at a temperature of around 600°C. Thus, the present inventors found that an aluminum alloy material having higher strength can be obtained by utilizing the aging precipitation of Al₂CuMg. Like Si, Cu also has the action of decreasing the melting point of an aluminum alloy material. However, the influence of the action of Cu is not as great as that of Si. Even if the content of Cu is relatively large, brazing at a temperature of around 600°C is possible. Therefore, an aluminum alloy clad material using a core material with a decreased Si content and an increased Cu content was designed.

Further, it is desirable to increase the amount of solid solution of Cu after brazing heating, for utilizing the aging precipitation of Al₂CuMg. Thus, the precipitation of coarse Al₂Cu having an equivalent circle diameter of 0.1 µm or more was inhibited to increase the amount of solid solution of Cu after the brazing heating. Further, it is necessary to reduce the number of dislocation loops in an aluminum alloy in order to more effectively utilize the aging precipitation of Al₂CuMg. An Al-Mn-based intermetallic compound has the action of allowing surplus vacancies caused by quenching to vanish in an interface between the intermetallic compound and a matrix and therefore has the effect of reducing the number of dislocation loops. Therefore, it was decided to promote the precipitation of a coarse Al-Mn-based intermetallic compound having an equivalent circle diameter of 0.1 µm or more.

However, a larger amount of Cu has been found to be solid-dissolved in an Al-Mn-based intermetallic compound than in a matrix. Therefore, an increase in the amount of precipitated Al-Mn-based intermetallic compound causes Cu solid-dissolved in the matrix to be solid-dissolved in the Al-Mn-based intermetallic compound, thereby reducing the amount of solid solution of Cu in the matrix. As a result, it is impossible to effectively utilize the aging precipitation of Al₂CuMg. Against such a problem, the present inventors found that the diffusion of Si from a skin material into a core material in brazing heating allows Cu solid-dissolved in an Al-Mn-based intermetallic compound to be discharged into a matrix, thereby increasing the amount of solid solution of Cu in the matrix. As a result, an increase in strength caused by the aging precipitation of Al₂CuMg can be more effectively utilized than before.

Conventionally, it has been common to use an Al-Zn-based alloy or an Al-Zn-Mg-based alloy as a sacrificial anode material. However, a higher content of Cu in a core material results in the increased rate of corroding the core material itself. Accordingly, the cladding of a conventional sacrificial anode material on a core material with a high content of Cu results in a further increase in the rate of corroding the core material due to Zn in the sacrificial anode material, diffused in the core material, thereby preventing a sufficient sacrificial protection effect from being obtained. In contrast, use of an Al-Si-Mg alloy as a sacrificial anode material results in the improvement of the strength of a core material due to the effect of enhancing the amount of solid solution of Cu in the core material and enables the rate of corroding the core material to be decreased because of preventing Zn from being diffused from the sacrificial anode material into the core material. As a result, the core material has high strength, and a decrease in the rate of corroding the core material is achieved. Therefore, an aluminum alloy clad material in which the core material is strengthened and which has excellent corrosion resistance can be obtained.

### 1-2. Core material

A core material in the aluminum alloy clad material according to the present embodiment includes an aluminum alloy including more than 0% and less than 0.2% of Si, 0.05 to 0.30% of Fe, 1.0 to 2.5% of Cu, 1.0 to 1.6% of Mn, 0.1 to 1.0% of Mg, and the balance of Al and inevitable impurities. The aluminum alloy may further contain one or more selected from the group consisting of 0.05 to 0.20% of Ti, 0.05 to 0.20% of Zr, 0.05 to 0.20% of V, and 0.05 to 0.20% of Cr.

Si is included as an inevitable impurity in the aluminum alloy. Si is solid-dissolved in the matrix of the aluminum alloy to improve the strength of the aluminum alloy material by solid solution strengthening. In addition, Si forms an intermetallic compound to improve the strength of the aluminum alloy material by precipitation strengthening. However, when a large amount of Cu coexists, Si as a simple substance or an Al-Cu-Si-based intermetallic compound is precipitated. A Si content of 0.2% or more causes the intermetallic compound to be precipitated in a grain boundary, thereby resulting in the corrosion of the grain boundary and deteriorating corrosion resistance. In addition, the melting point of the aluminum alloy material may be decreased. Accordingly, the content of Si is set to more than 0% and less than 0.2%, and preferably set to less than 0.1%. The lower limit value of the content of Si may be 0.01%.

Fe forms, together with Mn, an intermetallic compound in the aluminum alloy. The intermetallic compound is crystallized or precipitated, thereby improving the strength of the material by dispersion strengthening. An Fe content of less than 0.05% prevents such an effect from being sufficiently obtained. In contrast, an Fe content of more than 0.30% causes Fe that forms, together with Mn, no intermetallic compound to be generated and to become an origin of corrosion. Accordingly, the content of Fe is set to 0.05 to 0.30%, and preferably set to 0.05 to 0.20%.

Mn reacts with Si, Fe, and Cu in the aluminum alloy to form Al-Fe-Mn-based, Al-Si-Fe-Mn-based, and Al-Cu-Mn-based intermetallic compounds. The intermetallic compounds are crystallized or precipitated to improve the strength of the aluminum alloy material by dispersion strengthening. In addition, the intermetallic compounds form an interface incoherent with a matrix, and the interface becomes a site in which vacancies, introduced into the aluminum alloy material in brazing, vanish. When the vacancies are introduced into the aluminum alloy material in the brazing, the vacancies form dislocation loops in the cooling of the brazing. After the brazing, an S' phase is inhomogeneously precipitated on the dislocation loops. Since the S' phase has a low contribution to strength, the strength of the material is decreased. However, the presence of the Al-Fe-Mn-based, Al-Si-Fe-Mn-based, and Al-Cu-Mn-based intermetallic compounds enables the vanishment of vacancies causing dislocation loops and therefore inhibits dislocation loops from remaining in the material after brazing heating. As a result, the inhomogeneous precipitation of the S' phase is suppressed to promote the aging precipitation of Al₂CuMg. An Al₂CuMg phase has a great contribution to strength. As a result, the addition of Mn results in improvement in strength. A Mn content of less than 1.0% prevents such an effect from being sufficiently obtained. In contrast, a Mn content of more than 1.6% results in the formation of a coarse crystallized products, thereby deteriorating yield. Accordingly, the content of Mn is set to 1.0 to 1.6%, and preferably set to 1.2 to 1.5%.

Cu reacts with Mg in the aluminum alloy to form Al₂CuMg. Al₂CuMg greatly improves the strength of the material by aging precipitation after brazing. A Cu content of less than 1.0% prevents such an effect from being sufficiently obtained. In contrast, a Cu content of more than 2.5% may result in a decrease in the melting point of the aluminum alloy material. In addition, Al₂Cu is precipitated in a grain boundary, thereby causing intergranular corrosion. Accordingly, the content of Cu is set to 1.0 to 2.5%, and preferably set to 1.5 to 2.5%.

Mg reacts with Cu in the aluminum alloy to form Al₂CuMg. Al₂CuMg greatly improves the strength of the aluminum alloy material by aging precipitation after brazing. A Mg content of less than 0.1% prevents such an effect from being sufficiently obtained. In contrast, a Mg content of more than 1.0% results in the diffusion of Mg in a surface of a brazing filler material in brazing under an atmosphere using noncorrosive flux, thereby deteriorating brazeability. Moreover, elongation before the brazing may be decreased, thereby deteriorating molding workability. Accordingly, the content of Mg is set to 0.1 to 1.0%, and preferably set to 0.1 to 0.5%.

Each of Cr and Zr forms a fine intermetallic compound in the aluminum alloy to improve the strength of the material. When the content of each of Cr and Zr is less than 0.05%, such an effect is prevented from being sufficiently obtained. In contrast, when the content of each of Cr and Zr is more than 0.20%, a coarse intermetallic compound may be formed, thereby deteriorating the molding workability of the aluminum alloy material. Accordingly, the content of each of Cr and Zr is set to 0.05 to 0.20%, and preferably set to 0.05 to 0.10%.

Each of Ti and V forms a fine intermetallic compound in the aluminum alloy to improve the strength of the material. Moreover, the intermetallic compound is dispersed in layer form. The intermetallic compound has a high potential and therefore exhibits the effect of inhibiting corrosion from proceeding in a depth direction although corrosion proceeds in a horizontal direction. When the content of each of Ti and V is less than 0.05%, such effects are insufficient. In contrast, when the content of each of Ti and V is more than 0.20%, a coarse intermetallic compound may be formed, thereby deteriorating workability in the case of molding the aluminum alloy material. Accordingly, the content of each of Ti and V is set to 0.05 to 0.20%, and preferably set to 0.05 to 0.10%.

A phase precipitated after brazing heating varies depending on the value of the ratio between Cu and Mg included in the aluminum alloy (Cu/Mg ratio). A Cu/Mg ratio of less than 1 results in the precipitation of Al₆CuMg₄ after the brazing heating. Al₆CuMg₄ has a low contribution to age hardening and may therefore result in a decrease in strength. In contrast, a Cu/Mg ratio of more than 8 results in the precipitation of Al₂Cu after the brazing heating. Al₂Cu also has a lower contribution to age hardening than Al₂CuMg and may therefore result in a decrease in strength. Accordingly, the Cu/Mg ratio is preferably 1 to 8, and more preferably 3 to 6.

The aluminum alloy of the core material in the aluminum clad alloy material of the present embodiment may further contain B having the action of allowing an ingot structure to be finer as well as other inevitable impurity elements. It is preferable that the content of each of these elements is 0.05% or less, and the total content of the elements is 0.2% or less.

### 1-3. Sacrificial Anode Material Layer

A sacrificial anode material layer in the aluminum alloy clad material according to the present embodiment includes an aluminum alloy including 0.1 to 1.5% of Si, 0.1 to 2.0% of Mg, and the balance of Al and inevitable impurities. The aluminum alloy may further contain one or more selected from the group consisting of 0.05 to 1.00% of Fe, 0.05 to 1.00% of Ni, 0.05 to 1.00% of Cu, 0.05 to 1.50% of Mn, 0.05 to 1.00% of Zn, 0.05 to 0.20% of Ti, 0.05 to 0.30% of Zr, 0.05 to 0.30% of Cr, and 0.05 to 0.30% of V.

Si and Mg form a Mg-Si-based crystallized product and a fine Mg-Si-based precipitate which contain Mg and Si as main components in the sacrificial anode material layer in the aluminum alloy. The Mg-Si-based crystallized product is, for example, Mg₂Si including Mg and Si at an atomic number ratio of two to one. The crystallized product includes not only Mg₂Si but also a ternary composition of Mg-Si-Fe or Mg-Si-Cu, or a quaternary composition of Mg-Si-Fe-Cu in a case in which the sacrificial anode material layer contains Fe and Cu as selectively added elements. Mg₂Si and the ternary and quaternary compositions can be allowed to have appropriate distributions, thereby exhibiting a sacrificial protection effect without using Zn, because of having lower pitting potentials than the pitting potential of the matrix and being therefore preferentially dissolved.

In contrast, the Mg-Si-based precipitate has an acicular β" phase (Mg₂Si) or a Q" phase (Al-Mg-Si-Cu) having the same shape in the case of the addition of Cu. The Mg-Si-based precipitate can be allowed to have an appropriate distribution, thereby exhibiting a sacrificial protection effect even without using a large amount of Zn, because of having a lower pitting potential than the pitting potential of the matrix and being therefore preferentially dissolved. The Mg-Si-based precipitate also has the action of forming a Si-enriched layer on a surface by the preferential elution of Mg in the dissolution of the precipitate, thereby further improving corrosion resistance.

When at least either of the content of Si and the content of Mg is less than 0.10% in the aluminum alloy, a sacrificial protection effect and the effect of forming a Si-enriched layer are prevented from being sufficiently obtained because the amounts of Mg-Si-based crystallized product and Mg-Si-based precipitate having predetermined sizes are small. A Si content of 1.50% or more results in a decrease in melting point and therefore causes a part or the whole of the sacrificial anode material layer to be melted in the production of the aluminum alloy material. In addition, the density of the Mg-Si-based precipitate may become greater than a set value, thereby deteriorating corrosion resistance. A Mg content of more than 2.00% results in a thicker oxide film on a surface of the sacrificial anode material layer, thereby precluding the production of a clad material favorable with the core material. As a result, the contents of Si and Mg in the sacrificial anode material layer are set to 0.10 to 1.50% and 0.10 to 2.00%, respectively. The contents of Si and Mg are preferably set to 0.20 to 1.00% and 0.30 to 1.00%, respectively.

With regard to the contents of Si and Mg, it is important to control not only the contents but also the ratio between Mg and Si in order to allow the Mg-Si-based crystallized product and the Mg-Si-based precipitate to exhibit the sacrificial protection effect. The Mg-Si-based crystallized product and the Mg-Si-based precipitate become Mg₂Si and have an atomic number ratio Mg/Si of 2 when being formed of only Mg and Si. The Mg-Si-based crystallized product and the Mg-Si-based precipitate have a mass% ratio of 0.18. There is no problem even if the rate of Mg becomes great in the above-mentioned composition range, and the Mg/Si ratio becomes high. However, the deterioration of corrosion resistance is caused when the rate of Si becomes great, and the Mg/Si ratio becomes low. When the rate of the content of Si is too high, the amount of solid solution of Si in the matrix of the sacrificial anode material layer becomes large, thereby allowing the sacrificial anode material layer to be noble. When the matrix of the sacrificial anode material layer becomes noble, the sacrificial protection effect of the Mg-Si-based crystallized product and the Mg-Si-based precipitate becomes insufficient in view of the effect of preventing the corrosion of the whole of the sacrificial anode material layer even if the sacrificial protection effect is exhibited. Thus, Mg/Si as mass% ratio is preferably a value of more than 0.18.

Fe and Ni contribute to improvement in the corrosion resistance of the aluminum alloy. Although these elements have the action of increasing the rate of corroding Al, the homogeneous distribution of an Fe-based intermetallic compound or a Ni-based intermetallic compound causes the dispersion of corrosion, thereby resulting in improvement in penetration life. When at least either of the contents of Fe and Ni is less than 0.05%, the effect of improving the penetration life becomes insufficient. In contrast, when at least either of the contents of Fe and Ni is more than 1.00%, a corrosion rate is remarkably increased. As a result, each of the contents of Fe and Ni is set to 0.05 to 1.00%, and preferably set to 0.10 to 0.50%.

Cu is contained in the aluminum alloy, thereby allowing the Mg-Si-based precipitate to have a Q" phase (Al-Mg-Si-Cu) and enabling the precipitate to be more finely dispersed. To that end, the content of Cu is set to 0.05% or more. However, a Cu content of more than 1.00% causes a corrosion rate to be remarkably increased. As a result, the content of Cu is set to 0.05 to 1.00%, and preferably set to 0.10 to 0.50%.

Mn is crystallized or precipitated as an Al-Mn-based intermetallic compound in the aluminum alloy to contribute to improvement in strength. In addition, the Al-Mn-based intermetallic compound takes in Fe and therefore has the function of suppressing the action of increasing a corrosion rate due to Fe as an inevitable impurity and Fe added for the purpose of improving corrosion resistance. The content of Mn is set to 0.05% or more in order to obtain such effects. However, a Mn content of more than 1.50% may cause a giant intermetallic compound to be crystallized, thereby impairing productability. As a result, the content of Mn is set to 0.05 to 1.50%, and preferably set to 0.10 to 1.00%.

Zn need not be contained in the aluminum alloy. When Zn contained in the aluminum alloy, excellent corrosion resistance can be obtained due to the actions of the Mg-Si-based crystallized product and precipitate even in the case of a small Zn content of 0.05 to 1.00%. A Zn content of more than 1.00% results in an increase in corrosion rate, thereby causing the sacrificial anode material layer to early disappear.

Ti, Zr, Cr, and V contribute to improvement in corrosion resistance, particularly pitting corrosion resistance, in the aluminum alloy. Ti, Zr, Cr, and V added into the aluminum alloy are divided into a region at the high concentrations of Ti, Zr, Cr, and V and a region at the low concentrations of Ti, Zr, Cr, and V, and the regions are alternately distributed in lamination form along the sheet thickness direction of the sacrificial anode material layer. The region at the low concentrations is more preferentially corroded than the region at the high concentrations, thereby having layered corrosion form. As a result, the slow rate of corrosion partially occurs along the sheet thickness direction of the sacrificial anode material layer, the corrosion is inhibited from proceeding as a whole, and pitting corrosion resistance is improved. In order to sufficiently obtain such an effect of improving pitting corrosion resistance, the content of each of Ti, Zr, Cr, and V is set to 0.05% or more. In contrast, when the content of Ti is more than 0.20%, and the content of each of Zr, Cr, and V is more than 0.30%, a coarse compound may be produced in casting, thereby impairing productability. As a result, the content of Ti is set to 0.05 to 0.20%, and preferably set to 0.10 to 0.20%. In addition, the content of each of Zr, Cr, and V is set to 0.05 to 0.30%, and preferably set to 0.10 to 0.20%.

Even if Na, Ca, and the like, in addition to the essential elements and selectively added elements described above, are contained, as inevitable impurities, in each amount of 0.05% or less and a total amount of 0.15% or less, the action of the sacrificial anode material layer is not impaired.

### 1-4. Brazing Filler Material

An aluminum alloy that is commonly used for brazing the aluminum alloy can be used as the brazing filler material. Examples thereof include Al-Si-based alloys, Al-Si-Cu-based alloys, Al-Si-Cu-Zn-based alloys, Al-Si-Mg-based alloys, and Al-Si-Mg-Bi-based alloys.

Specifically, an aluminum alloy including 7.0 to 12.0% of Si and the balance of Al and inevitable impurities is used as such an Al-Si-based alloy. A Si content of less than 7.0% may result in an insufficient liquid phase rate in brazing performed later, thereby causing non-bonding with a fin to occur. In contrast, a Si content of more than 12.0% results in the crystallization of coarse pure Si particles, thereby deteriorating formability. Further, an aluminum alloy including 7.0 to 12.0% of Si, 0.5 to 2.5% of Cu, and the balance of Al and inevitable impurities is used as such an Al-Si-Cu-based alloy obtained by adding Cu to the alloy. The addition of Cu to the brazing filler material enables the suppression of the diffusion of Cu in the core material into the brazing filler material in the brazing performed later, thereby resulting in high strength after brazing heating. A Cu content of less than 0.5% prevents the effect described above from being obtained. In contrast, a Cu content of more than 2.5% results in an increase in the amount of Cu diffused from the brazing filler material into the core material and may therefore cause the core material to be melted in the brazing. Further, an aluminum alloy including 7.0 to 12.0% of Si, 0.5 to 2.5% of Cu, 0.1 to 3.0% of Zn, and the balance of Al and inevitable impurities is used as such an Al-Si-Cu-Zn-based alloy obtained by adding Zn to the alloy. The addition of Zn to the Al-Si-Cu-based brazing filler material enables the potential of a fillet, allowed to be higher by the addition of Cu, to be lower, to suppress the preferential corrosion of the core material. A Zn content of less than 0.1% prevents the effect described above from being obtained. In contrast, a Zn content of more than 3.0% may cause the potential of the fillet to be too low, thereby resulting in the preferential corrosion.

### 2. Metal Structure of Aluminum Alloy Clad Material

### 2-1. Core material

In the core material, an Al-Mn-based intermetallic compound (for example, an Al-Mn-based, Al-Mn-Si-based, Al-Fe-Mn-Si-based, or Al-Cu-Mn-based intermetallic compound) having an equivalent circle diameter of 0.1 µm or more is hardly solid-dissolved in the aluminum alloy in brazing and remains even after the brazing because of having a relatively large size. Because the lattice constant of the Al-Mn-based intermetallic compound is different from that of Al in a matrix, the Al-Mn-based intermetallic compound forms an interface incoherent with the matrix, and the interface becomes a site in which vacancies, introduced into the aluminum alloy material in brazing, vanish. When the vacancies are introduced into the aluminum alloy in the brazing, the vacancies form dislocation loops in the cooling of the brazing. After the brazing, an S' phase is inhomogeneously precipitated on the dislocation loops. The S' phase is the aging precipitated phase of an Al-Cu-Mg-based alloy but has a low contribution to strength. Nevertheless, the amount of solid solution of Cu is decreased, and therefore, the strength of the aluminum alloy is decreased.

However, the presence of the Al-Mn-based intermetallic compound in not less than a certain amount results in a decrease in dislocation loops existing in the aluminum alloy after the brazing and therefore enables the suppression of the precipitation of the S' phase to enable the effective utilization of the aging precipitation of Al₂CuMg. As a result, the strength of the aluminum alloy material is improved. The effect of improving the strength becomes insufficient when the number density of the Al-Mn-based intermetallic compound having an equivalent circle diameter of 0.1 µm or more is less than 1.0 × 10⁵ particles /mm². Accordingly, the number density of the Al-Mn-based intermetallic compound having an equivalent circle diameter (diameter of equivalent circle) of 0.1 µm or more in the core material is set to 1.0 × 10⁵ particles /mm² or more, and preferably set to 2.0 × 10⁵ particles /mm² or more. The upper limit value of the number density is around 1.0 × 10⁸ particles /mm² in the present embodiment although depending on the composition of an alloy and on a production method. The equivalent circle diameter of the Al-Mn-based intermetallic compound is set to 0.1 µm or more. The upper limit value of the equivalent circle diameter also depends on the composition of the alloy and on the production method. In the present embodiment, the upper limit value is around 30 µm.

The number density of the Al-Mn-based intermetallic compound having an equivalent circle diameter of 0.1 µm or more is determined by observing the aluminum alloy with a scanning electron microscope (SEM) and performing the image analysis of an SEM image. For an observation point, an optional portion of the core material, for example, an optional cross section along a thickness direction or a cross section parallel to a sheet material surface is observed. The measurement of an optional cross section along a thickness direction is preferred from the viewpoint of simplicity. The number density is set as the arithmetic mean value of measurement values at plural points.

In the core material, Al₂Cu having an equivalent circle diameter of 0.1 µm or more is hardly solid-dissolved in the aluminum alloy in brazing and remains even after the brazing because of having a relatively large size. As a result, the amount of solid solution of Cu in the core material after the brazing is decreased. When the amount of solid solution of Cu in the core material after the brazing is small, it is impossible to sufficiently obtain the effect of improving the strength of the aluminum alloy material due to the aging precipitation of Al₂CuMg, and Al₂Cu becomes an origin of intergranular corrosion, whereby corrosion resistance is also deteriorated. Accordingly, the number density of Al₂Cu having an equivalent circle diameter of 0.1 µm or more in the core material is set to 1.0 × 10⁵ particles /mm² or less, and preferably set to 0.8 × 10⁵ particles /mm² or less. The lower limit value of the number density is around 1.0 × 10³ particles /mm² although depending on the composition of the alloy and the production method. The equivalent circle diameter of Al₂Cu is set to 0.1 µm or more. The upper limit value of the equivalent circle diameter also depends on the composition of the alloy and on the production method, and is around 10 µm.

The number density of Al₂Cu having an equivalent circle diameter of 0.1 µm or more is determined by observing the aluminum alloy with SEM and performing the image analysis of an SEM image. For an observation point, an optional portion of the core material, for example, an optional cross section along a thickness direction or a cross section parallel to a sheet material surface is observed. The measurement of an optional cross section along a thickness direction is preferred from the viewpoint of simplicity. The number density is set as the arithmetic mean value of measurement values at plural points.

### 2-2. Sacrificial Anode Material Layer

In the sacrificial anode material layer of the aluminum alloy clad material according to the present embodiment, the number density of a Mg-Si-based crystallized product having an equivalent circle diameter of 0.1 to 5.0 µm is set to 100 to 150,000 particles /mm², and preferably set to 100 to 100,000 particles /mm². Further, the number density of a Mg-Si-based crystallized product having an equivalent circle diameter of more than 5.0 µm and 10.0 µm or less is set to 5 particles /mm² or less, preferably set to 3 particles /mm² or less, and most preferably set to 0 particles /mm². The Mg-Si-based crystallized product basically includes Mg and Si at an atomic number ratio of two to one. The crystallized product includes not only Mg₂Si but also a ternary composition of Mg-Si-Fe or Mg-Si-Cu, or a quaternary composition of Mg-Si-Fe-Cu in a case in which the sacrificial anode material layer contains Fe and Cu as selectively added elements.

A sacrificial protection effect can be exhibited by setting the number density of the Mg-Si-based crystallized product having the predetermined equivalent circle diameter to the predetermined level as described above. Since the Mg-Si-based crystallized product is distributed in a shape similar to a sphere, the size of the Mg-Si-based crystallized product can be set as an equivalent circle diameter. The size of the Mg-Si-based crystallized product present in the sacrificial anode material layer is typically an equivalent circle diameter of 0.1 to 10.0 µm. In this range, the equivalent circle diameter of the crystallized product, capable of exhibiting a sacrificial protection effect, is 0.1 to 5.0 µm. It is necessary to set the surface density of the crystallized product having this size to 100 to 150,000 particles /mm². When the number density is less than 100 particles /mm², it is impossible to exhibit a sufficient sacrificial protection effect. In contrast, when the number density is more than 150,000 particles /mm², a corrosion rate becomes too high, thereby deteriorating corrosion resistance. A Mg-Si-based crystallized product having an equivalent circle diameter of less than 0.1 µm is regarded as inapplicable because of hardly existing in the sacrificial anode material layer.

In a Mg-Si-based crystallized product having an equivalent circle diameter of more than 5.0 µm and 10.0 µm or less, corrosion concentrates in the crystallized product, thereby greatly deteriorating a sacrificial protection function. For preventing the sacrificial protection functional from being greatly deteriorated, it is necessary to set the surface density of the Mg-Si-based crystallized product having this size to 5 particles /mm² or less. A Mg-Si-based crystallized product having an equivalent circle diameter of more than 10 µm is solid-dissolved again by working such as hot rolling or by heat treatment such as homogenization treatment, and therefore hardly exists.

The number density of the Mg-Si-based crystallized product described above is measured by observing an optional portion of the sacrificial anode material layer with an optical microscope or an electron microscope. For example, an optional cross section along a thickness direction or a cross section parallel to a sheet material surface is observed. The measurement of an optional cross section along a thickness direction is preferred from the viewpoint of simplicity. The number density is set as the arithmetic mean value of measurement values at plural points.

### 3. Method for Producing Aluminum Alloy Clad Material

In Embodiment 1, first, an aluminum alloy to be a core material is cast. Specifically, the material of the aluminum alloy having the composition described above is melted, and an ingot of the aluminum alloy for a core material is produced by a direct chill (DC) casting method. In the DC casting method, the rate of cooling a molten metal is as high as 0.5 to 20°C/s. Therefore, an intermetallic compound generated in casting is fine, and elements included in the aluminum alloy are solid-dissolved in a supersaturation state. However, a large amount of coarse Al₂Cu having an equivalent circle diameter of 0.1 µm or more may be generated in the ingot, depending on casting conditions. When such Al₂Cu exists in the ingot of the core material, the amount of solid solution of Cu into a matrix is decreased, and solid solution Cu contributing to aging precipitation is insufficient in natural aging after brazing heating performed later. As a result, strength after the brazing heating may be decreased.

Against the generation of a large amount of such coarse Al₂Cu in the casting step, a homogenization treatment step may be performed because the coarse Al₂Cu is solid-dissolved into the matrix by subjecting the ingot to homogenization treatment, whereby strength after brazing heating can be stabilized to obtain high strength. A homogenization treatment temperature of less than 400°C prevents the effect described above from being sufficiently obtained. In contrast, a homogenization treatment temperature of more than 550°C results in a decrease in the density of an Al-Mn-based intermetallic compound. Therefore, the homogenization treatment is not performed, or the homogenization treatment is performed at a temperature of 400 to 550°C, preferably 400 to 500°C, when the homogenization treatment is performed. A homogenization treatment time of less than 2 hours prevents the effect described above from being obtained. In contrast, homogenization treatment performed even for more than 20 hours results in no change in the effect and is uneconomical. Therefore, the homogenization treatment is performed for a time of 2 hours to 20 hours, preferably for 5 hours to 15 hours. It is desirable to perform facing treatment of the cooled ingot after the homogenization treatment.

Then, an aluminum alloy to be a sacrificial anode material layer is cast. Specifically, the material of the aluminum alloy having the composition described above is melted, and an ingot of the aluminum alloy for the sacrificial anode material layer is produced by a DC casting method. In the DC casting method, the rate of cooling a surface of the ingot of the aluminum alloy for the sacrificial anode material layer is set to 1°C/s or more, and preferably set to 1.5°C/s or more. When the cooling rate is less than 1°C/s, a coarse Mg-Si-based crystallized product is generated in the sacrificial anode material layer, and it is impossible to obtain the appropriate distribution of the Mg-Si-based crystallized product described above. The upper limit value of the cooling rate is not particularly limited, but is set to 50°C/s. The cooling rate can be calculated from a dendrite arm spacing by observing the structure of the ingot. The surface of the ingot refers to a range from the outermost surface to 30 mm.

The ingot of the aluminum alloy for the sacrificial anode material layer cast by the DC casting method is subjected to a homogenization treatment step in which heat treatment is performed at a temperature of 450 to 570°C for 1 hour or more, preferably at a temperature of 450 to 550°C for 2 hours or more. As a result, a metal structure in the sacrificial anode material layer can be homogenized, and a coarse Mg-Si-based crystallized product can be solid-dissolved again. A heat treatment temperature of less than 450°C or a heat treatment time of less than 1 hour prevents the effect of homogenizing the metal structure and the effect of solid-dissolving the coarse Mg-Si-based crystallized product again from being sufficiently obtained. Even if the heat treatment temperature is more than 570°C, the effects are not changed, and poor economical efficiency is shown. The upper limit value of the heat treatment time is not particularly limited, but is preferably set to 20 hours or less from an economical viewpoint and the like.

In Embodiment 2, in order to also further clad a brazing filler material, an aluminum alloy to be the brazing filler material is cast to produce an ingot of the aluminum alloy for the brazing filler material. A commonly used method may be adopted for a step of casting the brazing filler material. Like the aluminum alloys for the core material and for the sacrificial anode material layer, a DC casting method is preferably used.

In Embodiment 1, first, the ingot of the aluminum alloy for the sacrificial anode material layer is subjected to hot-rolling treatment until having a predetermined thickness. The ingot of the aluminum alloy for the sacrificial anode material layer is preferably subjected to facing treatment before the hot-rolling treatment. Then, the hot-rolled sacrificial anode material is combined with the ingot of the aluminum alloy for the core material in a joining step to form a joined material. Specifically, one surface or both surfaces of the ingot for the core material are combined with the hot-rolled sacrificial anode material. Then, the joined material is subjected to a joining heating step of heating the joined material and a hot clad rolling step, thereby thinning the joined material to have a predetermined sheet thickness. When the heating temperature of the joined material is more than 550°C, Mn solid-dissolved in the aluminum alloy ingot for the core material does not generate a precipitate of an Al-Mn-based intermetallic compound, and the number density of an Al-Mn-based intermetallic compound having an equivalent circle diameter of 0.1 µm or more is not increased. In contrast, when the heating temperature is less than 420°C, the diffusion rate of Mn is too low, therefore, an Al-Mn-based intermetallic compound is not newly precipitated, and the number density of the Al-Mn-based intermetallic compound having an equivalent circle diameter of 0.1 µm or more is not increased. As described above, the heating temperature in the joining heating step is set to 420 to 550°C, and preferably set to 420 to 500°C. A retention time in the heating step is preferably set to 5 hours or less from the viewpoint of economical efficiency.

After the heating step, a hot-rolling step is performed, and the temperature of the aluminum alloy joined material is gradually decreased with decreasing the sheet thickness. Cu solid-dissolved in the aluminum alloy for the core material is precipitated as coarse Al₂Cu in a temperature range of 320°C to 400°C. Therefore, retention for more than 6 minutes in the temperature range may cause the number density of Al₂Cu having an equivalent circle diameter of 0.1 µm or more in the core material to be more than 1.0 × 10⁵ particles /mm². Therefore, a retention time in a temperature range of 320°C to 400°C after the heating step is set to 6 minutes or less, preferably to 5 minutes or less.

After the joining heating step, the joined material is subjected to the hot clad rolling step. Then, the hot-clad-rolled clad material is subjected to cold-rolling treatment in a cold-rolling step until having a target sheet thickness, to thereby obtain an aluminum alloy clad material. Intermediate annealing treatment may be performed during the cold-rolling step, and final annealing treatment may be performed after the cold-rolling step. Only either or both of the intermediate annealing treatment and the final annealing treatment may be performed. When plural cold-rolling operations are performed in the cold-rolling step, plural times of annealing may be performed between the cold-rolling operations in the intermediate annealing treatment.

The aluminum alloy clad material according to the present embodiment allows the strength of an aluminum alloy sheet to be high because the content of Cu in the core material is large. Therefore, for securing formability, it is preferable to perform the final annealing treatment, and it is more preferable to perform the intermediate annealing treatment as well as the final annealing treatment. An annealing temperature is set to 200 to 320°C. An annealing temperature of more than 320°C may result in an increase in the number density of Al₂Cu having an equivalent circle diameter of 0.1 µm or more. In contrast, an annealing temperature of less than 200°C prevents lattice defects introduced in the cold rolling from vanishing, prevents the softening of the aluminum alloy clad material from proceeding, and prevents the effective effect of the annealing from being obtained. Accordingly, both the intermediate annealing treatment and the final annealing treatment in the annealing treatment in the present disclosure are performed at a temperature of 200 to 320°C.

In addition to Embodiment 1, an aluminum alloy to be a brazing filler material is cast to cast an ingot of an aluminum alloy for the brazing filler material, and the ingot is subjected to hot-rolling treatment to have a predetermined thickness, in Embodiment 2. In a joining step, the ingot of the aluminum alloy for the core material is combined with the hot-rolled sacrificial anode material and brazing filler material to form a joined material. Specifically, one surface of the ingot for the core material is combined with the hot-rolled sacrificial anode material, and the other surface of the ingot for the core material is combined with the hot-rolled brazing filler material, to thereby form the joined material. A cooling rate, a heating temperature, a heating time, and the like are the same as those in Embodiment 1.

### Examples

The present disclosure will now be described in more detail with reference to Examples. The present disclosure is not limited thereto.

Under production conditions set forth in Table 4, core materials, sacrificial anode material layers, and brazing filler materials were produced using alloys having compositions set forth in Table 1 to Table 3, respectively. In the alloy compositions of Table 1 to Table 3, "-" denotes not more than a detection limit, and "balance" includes inevitable impurities.

### [Table 1]

**Table 1**

| Alloy No. | Alloy composition (mass%) | | | | | | | | | |
|---|---|---|---|---|---|---|---|---|---|---|
| | Si | Fe | Cu | Mn | Mg | Ti | Zr | Cr | V | Al |
| 1 | 0.05 | 0.20 | 1.5 | 1.3 | 0.3 | - | - | - | - | Balance |
| 2 | 0.1 | 0.20 | 1.5 | 1.3 | 0.3 | - | - | - | - | Balance |
| 3 | 0.19 | 0.20 | 1.5 | 1.3 | 0.3 | - | - | - | - | Balance |
| 4 | 0.1 | 0.05 | 1.5 | 1.3 | 0.3 | - | - | - | - | Balance |
| 5 | 0.1 | 0.30 | 1.5 | 1.3 | 0.3 | - | - | - | - | Balance |
| 6 | 0.1 | 0.20 | 1.0 | 1.3 | 0.3 | - | - | - | - | Balance |
| 7 | 0.1 | 0.20 | 2.0 | 1.3 | 0.3 | - | - | - | - | Balance |
| 8 | 0.1 | 0.20 | 2.5 | 1.3 | 0.3 | - | - | - | - | Balance |
| 9 | 0.1 | 0.20 | 1.5 | 1.0 | 0.3 | - | - | - | - | Balance |
| 10 | 0.1 | 0.20 | 1.5 | 1.2 | 0.3 | - | - | - | - | Balance |
| 11 | 0.1 | 0.20 | 1.5 | 1.5 | 0.3 | - | - | - | - | Balance |
| 12 | 0.1 | 0.20 | 1.5 | 1.6 | 0.3 | - | - | - | - | Balance |
| 13 | 0.1 | 0.20 | 1.5 | 1.3 | 0.1 | - | - | - | - | Balance |
| 14 | 0.1 | 0.20 | 1.5 | 1.3 | 0.125 | - | - | - | - | Balance |
| 15 | 0.1 | 0.20 | 1.5 | 1.3 | 0.5 | - | - | - | - | Balance |
| 16 | 0.1 | 0.20 | 1.5 | 1.3 | 1.0 | - | - | - | - | Balance |
| 17 | 0.1 | 0.20 | 1.5 | 1.3 | 0.3 | 0.05 | - | - | - | Balance |
| 18 | 0.1 | 0.20 | 1.5 | 1.3 | 0.3 | 0.10 | - | - | - | Balance |
| 19 | 0.1 | 0.20 | 1.5 | 1.3 | 0.3 | 0.20 | - | - | - | Balance |
| 20 | 0.1 | 0.20 | 1.5 | 1.3 | 0.3 | - | 0.05 | - | - | Balance |
| 21 | 0.1 | 0.20 | 1.5 | 1.3 | 0.3 | - | 0.10 | - | - | Balance |
| 22 | 0.1 | 0.20 | 1.5 | 1.3 | 0.3 | - | 0.20 | - | - | Balance |
| 23 | 0.1 | 0.20 | 1.5 | 1.3 | 0.3 | - | - | 0.05 | - | Balance |
| 24 | 0.1 | 0.20 | 1.5 | 1.3 | 0.3 | - | - | 0.10 | - | Balance |
| 25 | 0.1 | 0.20 | 1.5 | 1.3 | 0.3 | - | - | 0.20 | - | Balance |
| 26 | 0.1 | 0.20 | 1.5 | 1.3 | 0.3 | - | - | - | 0.05 | Balance |
| 27 | 0.1 | 0.20 | 1.5 | 1.3 | 0.3 | - | - | - | 0.10 | Balance |
| 28 | 0.1 | 0.20 | 1.5 | 1.3 | 0.3 | - | - | - | 0.20 | Balance |
| 29 | 0.2 | 0.20 | 1.5 | 1.3 | 0.3 | - | - | - | - | Balance |
| 30 | 0.1 | 0.04 | 1.5 | 1.3 | 0.3 | - | - | - | - | Balance |
| 31 | 0.1 | 0.40 | 1.5 | 1.3 | 0.3 | - | - | - | - | Balance |
| 32 | 0.1 | 0.20 | 0.9 | 1.3 | 0.3 | - | - | - | - | Balance |
| 33 | 0.1 | 0.20 | 2.6 | 1.3 | 0.3 | - | - | - | - | Balance |
| 34 | 0.1 | 0.20 | 1.5 | 0.9 | 0.3 | - | - | - | - | Balance |
| 35 | 0.1 | 0.20 | 1.5 | 1.7 | 0.3 | - | - | - | - | Balance |
| 36 | 0.1 | 0.20 | 1.5 | 1.3 | 0.09 | - | - | - | - | Balance |
| 37 | 0.1 | 0.20 | 1.5 | 1.3 | 1.1 | - | - | - | - | Balance |
| 38 | 0.1 | 0.20 | 1.5 | 1.3 | 0.3 | 0.30 | - | - | - | Balance |
| 39 | 0.1 | 0.20 | 1.5 | 1.3 | 0.3 | - | 0.30 | - | - | Balance |
| 40 | 0.1 | 0.20 | 1.5 | 1.3 | 0.3 | - | - | 0.30 | - | Balance |
| 41 | 0.1 | 0.20 | 1.5 | 1.3 | 0.3 | - | - | - | 0.30 | Balance |

**[Table 2]**

| Table 2 | | | | | | | | | | | | |
|---|---|---|---|---|---|---|---|---|---|---|---|---|
| Alloy No. | Alloy composition (mass%) | | | | | | | | | | | |
| | Si | Mg | Fe | Ni | Cu | Mn | Zn | Ti | Zr | Cr | V | Al |
| 42 | 0.1 | 0.4 | - | - | - | - | - | - | - | - | - | Balance |
| 43 | 0.2 | 0.4 | - | - | - | - | - | - | - | - | - | Balance |
| 44 | 0.3 | 0.4 | - | - | - | - | - | - | - | - | - | Balance |
| 45 | 1.0 | 0.4 | - | - | - | - | - | - | - | - | - | Balance |
| 46 | 1.5 | 0.4 | - | - | - | - | - | - | - | - | - | Balance |
| 47 | 0.2 | 0.1 | - | - | - | - | - | - | - | - | - | Balance |
| 48 | 0.2 | 1.0 | - | - | - | - | - | - | - | - | - | Balance |
| 49 | 0.2 | 2.0 | - | - | - | - | - | - | - | - | - | Balance |
| 50 | 0.2 | 0.4 | 0.05 | - | - | - | - | - | - | - | - | Balance |
| 51 | 0.2 | 0.4 | 1.00 | - | - | - | - | - | - | - | - | Balance |
| 52 | 0.2 | 0.4 | - | 0.05 | - | - | - | - | - | - | - | Balance |
| 53 | 0.2 | 0.4 | - | 1.00 | - | - | - | - | - | - | - | Balance |
| 54 | 0.2 | 0.4 | - | - | 0.05 | - | - | - | - | - | - | Balance |
| 55 | 0.2 | 0.4 | - | - | 1.00 | - | - | - | - | - | - | Balance |
| 56 | 0.2 | 0.4 | - | - | - | 0.05 | - | - | - | - | - | Balance |
| 57 | 0.2 | 0.4 | - | - | - | 1.50 | - | - | - | - | - | Balance |
| 58 | 0.2 | 0.4 | - | - | - | - | 0.05 | - | - | - | - | Balance |
| 59 | 0.2 | 0.4 | - | - | - | - | 1.00 | - | - | - | - | Balance |
| 60 | 0.2 | 0.4 | - | - | - | - | - | 0.05 | - | - | - | Balance |
| 61 | 0.2 | 0.4 | - | - | - | - | - | 0.20 | - | - | - | Balance |
| 62 | 0.2 | 0.4 | - | - | - | - | - | - | 0.05 | - | - | Balance |
| 63 | 0.2 | 0.4 | - | - | - | - | - | - | 0.30 | - | - | Balance |
| 64 | 0.2 | 0.4 | - | - | - | - | - | - | - | 0.05 | - | Balance |
| 65 | 0.2 | 0.4 | - | - | - | - | - | - | - | 0.30 | - | Balance |
| 66 | 0.2 | 0.4 | - | - | - | - | - | - | - | - | 0.05 | Balance |
| 67 | 0.2 | 0.4 | - | - | - | - | - | - | - | - | 0.30 | Balance |
| 68 | 0.09 | 0.4 | - | - | - | - | - | - | - | - | - | Balance |
| 69 | 1.6 | 0.4 | - | - | - | - | - | - | - | - | - | Balance |
| 70 | 0.2 | 0.09 | - | - | - | - | - | - | - | - | - | Balance |
| 71 | 0.2 | 2.1 | - | - | - | - | - | - | - | - | - | Balance |
| 72 | 0.2 | 0.4 | 1.10 | - | - | - | - | - | - | - | - | Balance |
| 73 | 0.2 | 0.4 | - | 1.10 | - | - | - | - | - | - | - | Balance |
| 74 | 0.2 | 0.4 | - | - | 1.10 | - | - | - | - | - | - | Balance |
| 75 | 0.2 | 0.4 | - | - | - | 1.60 | - | - | - | - | - | Balance |
| 76 | 0.2 | 0.4 | - | - | - | - | 1.10 | - | - | - | - | Balance |
| 77 | 0.2 | 0.4 | - | - | - | - | - | 0.30 | - | - | - | Balance |
| 78 | 0.2 | 0.4 | - | - | - | - | - | - | 0.40 | - | - | Balance |
| 79 | 0.2 | 0.4 | - | - | - | - | - | - | - | 0.40 | - | Balance |
| 80 | 0.2 | 0.4 | - | - | - | - | - | - | - | - | 0.40 | Balance |

### [Table 3]

**Table 3**

| Alloy No. | Alloy composition (mass%) | | | |
|---|---|---|---|---|
| | Si | Cu | Zn | Al |
| 81 | 7.0 | - | - | Balance |
| 82 | 10.0 | - | - | Balance |
| 83 | 12.0 | - | - | Balance |
| 84 | 10.0 | 0.5 | - | Balance |
| 85 | 10.0 | 1.5 | - | Balance |
| 86 | 10.0 | 2.5 | - | Balance |
| 87 | 10.0 | 1.5 | 0.1 | Balance |
| 88 | 10.0 | 1.5 | 1.5 | Balance |
| 89 | 10.0 | 1.5 | 3.0 | Balance |
| 90 | 6.9 | - | - | Balance |
| 91 | 12.1 | - | - | Balance |
| 92 | 10.0 | 2.6 | - | Balance |
| 93 | 10.0 | 1.5 | 3.1 | Balance |

### [Table 4]

**Table 4**

| Step No. | Homogenization treatment for core material | | Condition for casting sacrificial material | Homogenization treatment for sacrificial material | | Joining heat treatment | | | Intermediate annealing treatment | Final annealing treatment |
|---|---|---|---|---|---|---|---|---|---|---|
| | | | | | | Heating stage | | Retention stage | | |
| | Temperature [°C] | Time [hr] | Cooling rate [°C/min] | Temperature [°C] | Time [hr] | Temperature [°C] | Time [hr] | Retention time at 320-400°C [min] | Temperature [°C] | Temperature [°C] |
| 1 | 400 | 8 | 2 | 500 | 8 | 480 | 3 | 5 | - | 300 |
| 2 | 480 | 8 | 2 | 500 | 8 | 480 | 3 | 5 | - | 300 |
| 3 | 550 | 8 | 2 | 500 | 8 | 480 | 3 | 5 | - | 300 |
| 4 | - | | 1 | 500 | 8 | 480 | 3 | 5 | - | 300 |
| 5 | - | | 2 | 500 | 8 | 480 | 3 | 5 | - | 300 |
| 6 | - | | 3 | 500 | 8 | 480 | 3 | 5 | - | 300 |
| 7 | - | | 2 | 450 | 8 | 480 | 3 | 5 | - | 300 |
| 8 | - | | 2 | 570 | 8 | 480 | 3 | 5 | - | 300 |
| 9 | - | | 2 | 500 | 1 | 480 | 3 | 5 | - | 300 |
| 10 | - | | 2 | 500 | 8 | 420 | 3 | 5 | - | 300 |
| 11 | - | | 2 | 500 | 8 | 550 | 3 | 5 | - | 300 |
| 12 | - | | 2 | 500 | 8 | 480 | 1 | 5 | - | 300 |
| 13 | - | | 2 | 500 | 8 | 480 | 5 | 5 | - | 300 |
| 14 | - | | 2 | 500 | 8 | 480 | 3 | 6 | - | 300 |
| 15 | - | | 2 | 500 | 8 | 480 | 3 | 3 | - | 300 |
| 16 | - | | 2 | 500 | 8 | 480 | 3 | 5 | - | 320 |
| 17 | - | | 2 | 500 | 8 | 480 | 3 | 5 | - | 200 |
| 18 | - | | 2 | 500 | 8 | 480 | 3 | 5 | 300 | - |
| 19 | - | | 2 | 500 | 8 | 480 | 3 | 5 | 300 | 300 |
| 20 | 560 | 8 | 2 | 500 | 8 | 480 | 3 | 5 | - | 300 |
| 21 | - | | 0.9 | 500 | 8 | 480 | 3 | 5 | - | 300 |
| 22 | - | | 2 | 440 | 8 | 480 | 3 | 5 | - | 300 |
| 23 | - | | 2 | 500 | 0.9 | 480 | 3 | 5 | - | 300 |
| 24 | - | | 2 | 500 | 8 | 410 | 3 | 5 | - | 300 |
| 25 | - | | 2 | 500 | 8 | 560 | 3 | 5 | - | 300 |
| 26 | - | | 2 | 500 | 8 | 480 | 3 | 7 | - | 300 |
| 27 | - | | 2 | 500 | 8 | 480 | 3 | 5 | - | 330 |

First, each of the aluminum alloys used for the core materials set forth in Table 1, the aluminum alloys used for the sacrificial anode material layers set forth in Table 2, and the aluminum alloys used for the brazing filler materials set forth in Table 3 was cast by a DC casting method. After the casting, ingots of the aluminum alloys used for the core materials and the sacrificial anode material layers were subjected to homogenization treatment under the conditions set forth in Table 4, and were further subjected to facing treatment. The ingots of the sacrificial anode material layers were subjected to heat treatment at 450°C and then subjected to hot-rolling treatment until having a predetermined sheet thickness. After the casting, the ingots of the brazing filler material layers were subjected to facing treatment, subsequently subjected to heat treatment at 480°C, and then subjected to hot-rolling treatment until having a predetermined sheet thickness. One surface of each ingot for the core material was combined with each of the hot-rolled sacrificial anode material layers, and the other surface of the ingot for the core material was combined with each of the brazing filler materials, to thereby form a joined material with a cladding ratio, of each thereof, of 15%. The joined material was treated under the joining heat treatment conditions set forth in Table 4 and rolled to 2.6 mm by hot clad rolling treatment. Then, the obtained rolled material was allowed to have a sheet thickness of 0.2 mm by cold-rolling treatment and subjected to final annealing treatment under the condition set forth in Table 4 to obtain a sample material.

In each sample material produced as described above, "number density of Al-Mn-based intermetallic compound having equivalent circle diameter of 0.1 µm or more in core material ", "number density of Al₂Cu having equivalent circle diameter of 0.1 µm or more in core material ", "number density of Mg-Si-based crystallized product having equivalent circle diameter of 0.1 to 5.0 µm in sacrificial anode material", and "number density of Mg-Si-based crystallized product having equivalent circle diameter of more than 5.0 µm and 10.0 µm or less in sacrificial anode material" were measured by a method described below. The above evaluation results are set forth in Tables 5 to 9.

### [Table 5]

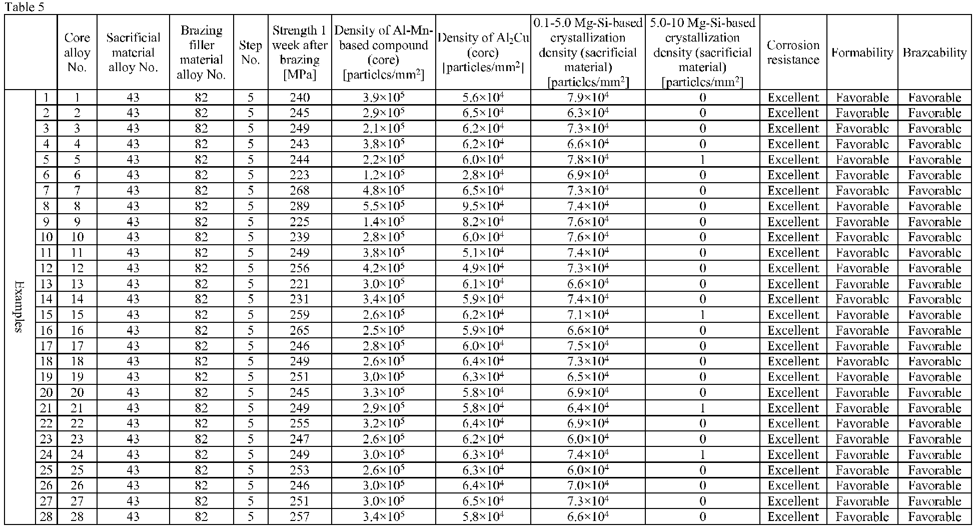

### [Table 6]

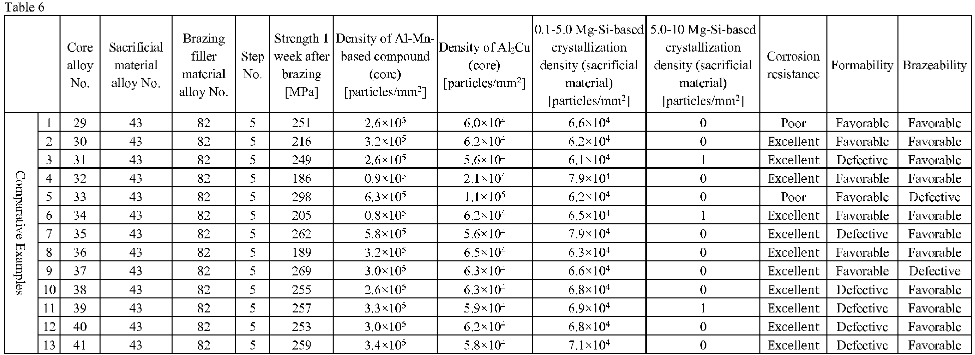

### [Table 7]

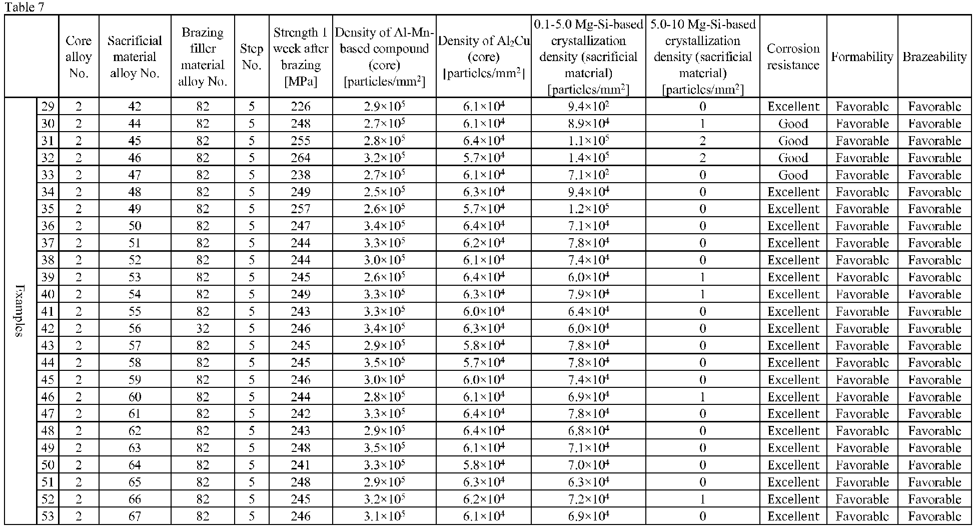

### [Table 8]

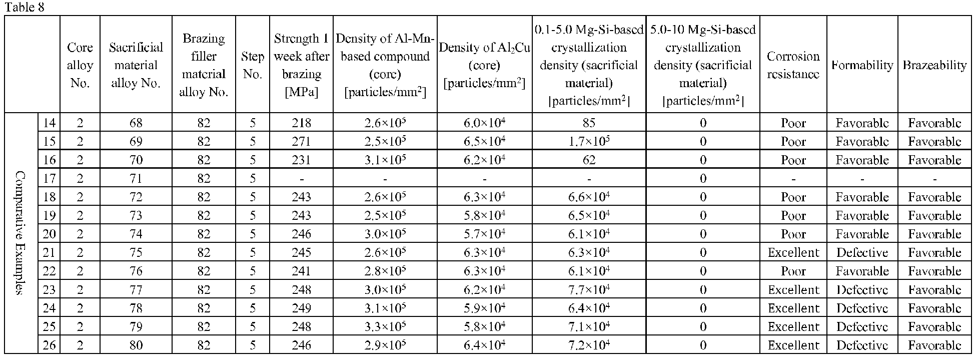

### [Table 9]

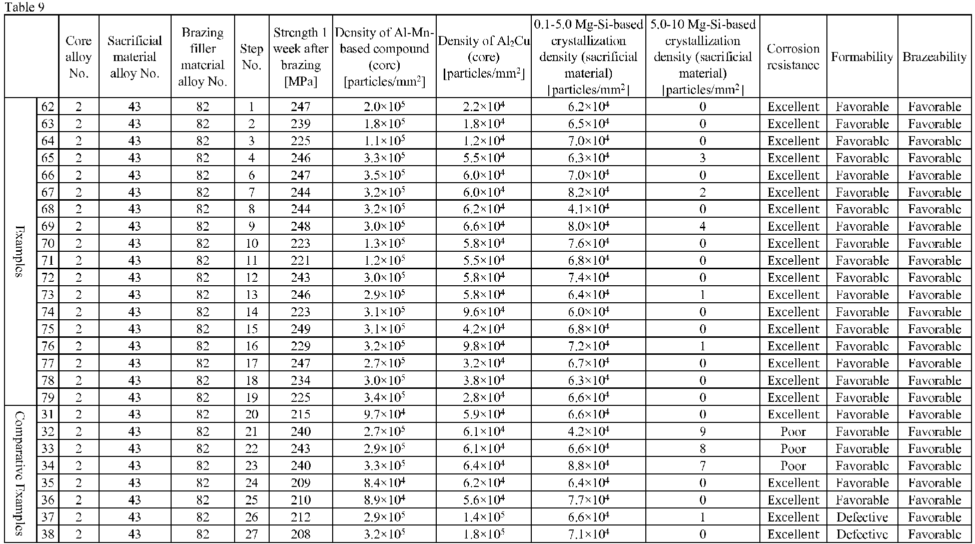

### [a] Number Density (Particles/mm²) of Al-Mn-Based Intermetallic Compound Having Equivalent Circle Diameter of 0.1 µm or More in Core Material

The number density of an Al-Mn-based intermetallic compound having an equivalent circle diameter of 0.1 µm or more was measured by performing the SEM observation of a core material alloy. The number density of the Al-Mn-based intermetallic compound before brazing heating was determined by observing the three visual fields of each sample material and performing the image analysis of an SEM image in each visual field with A-ZO-KUN (Asahi Kasei Engineering Corporation). A number density set forth in Tables is the arithmetic mean value of numerical values determined from the three visual fields of each sample.

### [b] Number Density (Particles/mm²) of Al₂Cu Having Equivalent Circle Diameter of 0.1 µm or More in Core Material

The number density of Al₂Cu having an equivalent circle diameter of 0.1 µm or more was measured by performing the SEM observation of a core material alloy in a manner similar to that in the case of the Al-Mn-based intermetallic compound. The three visual fields of each sample material were observed. The number density of Al₂Cu before brazing heating was determined by performing the image analysis of an SEM image in each visual field with A-ZO-KUN. A number density set forth in Tables is the arithmetic mean value of numerical values determined from the three visual fields of each sample.

### [c] Number Density (Particles/mm²) of Mg-Si-Based Crystallized Product Having Equivalent Circle Diameter of 0.1 to 5.0 µm in Sacrificial Anode Material Layer

The number density of a Mg-Si-based crystallized product having an equivalent circle diameter of 0.1 to 5.0 µm was measured by performing the SEM observation of a core material alloy in a manner similar to that in the case of the Al-Mn-based intermetallic compound in the core material. The three visual fields of each sample material were observed. The number density of the Mg-Si-based crystallized product before brazing heating was determined by performing the image analysis of an SEM image in each visual field with A-ZO-KUN. A number density set forth in Tables is the arithmetic mean value of numerical values determined from the three visual fields of each sample.

### [d] Number Density (Particles/mm²) of Mg-Si-Based Crystallized Product Having Equivalent Circle Diameter of More Than 5.0 µm and 10.0 µm or Less in Sacrificial Anode Material Layer

The number density of a Mg-Si-based crystallized product having an equivalent circle diameter of more than 5.0 µm and 10.0 µm or less was measured by performing the SEM observation of a core material alloy in a manner similar to that in the case of the Al-Mn-based intermetallic compound in the core material. The three visual fields of each sample material were observed. The number density of the Mg-Si-based crystallized product before brazing heating was determined by performing the image analysis of an SEM image in each visual field with A-ZO-KUN. A number density set forth in Tables is the arithmetic mean value of numerical values determined from the three visual fields of each sample.

In addition, each sample material produced as described above was subjected to brazing-equivalent heating at 600°C for 3 min and cooled at a cooling rate of 200°C/min. Then, each of "strength 1 week after brazing", "corrosion resistance", "formability", and "brazeability" of each sample material was evaluated by a method described below. The above evaluation results are also set forth in Tables 5 to 9. When the alloy component of a brazing filler material was changed, each of "strength 1 week after brazing", "external corrosion resistance", "formability", and "brazeability" was evaluated by a similar method. The results are set forth in Table 10.

### [Table 10]

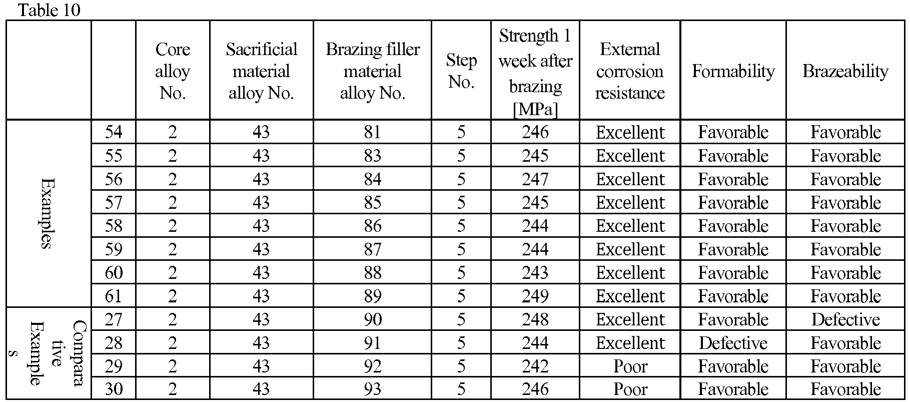

### [e] Strength (MPa) 1 Week after Brazing

A JIS No. 5 specimen was cut from each sample material. The specimen was subjected to the brazing-equivalent heating described above, subjected to natural aging at 25°C for 1 week, and subjected to a tensile test in conformity with JIS Z 2241: 2011. A tensile strength of 220 MPa or more was evaluated as superior, while a tensile strength of less than 220 MPa was evaluated as defective.

### [f] Corrosion Resistance

The sacrificial anode material surface of each sample material subjected to the brazing-equivalent heating was subjected to a circulation cycle test simulating a water-based refrigerant environment. An aqueous solution containing 195 ppm of Cl⁻, 60 ppm of SO₄²⁻, 1 ppm of Cu²⁺, and 30 ppm of Fe²⁺ at a temperature of 88°C was allowed to flow on a test surface of the specimen of each sample material at a solution volume to specimen area ratio of 6 mL/Cm² and a flow rate of 2 m/s for 8 hours, and the specimen was then left standing for 16 hours. Such a cycle including heating flowing and leaving was performed for 3 months. After the circulation cycle test, a corrosion product on a specimen surface was removed, and the depth of corrosion was measured. The maximum value of values at ten measurement spots per specimen was regarded as the depth of corrosion. A case in which the depth of corrosion was less than 70 µm was evaluated as "excellent" (superior), a case in which the depth of corrosion was 70 µm or more and 90 µm or less was evaluated as "good" (favorable), and cases in which the depth of corrosion was more than 90 µm, in which penetration occurred, and in which intergranular corrosion was observed were evaluated as "poor" (defective). The area other than the test surface was subjected to masking and prevented from coming in contact with a test aqueous solution.

### [g] Formability

A JIS No. 5 specimen was cut from each sample material and subjected to the brazing-equivalent heating described above. The elongation of the specimen, subjected to the brazing-equivalent heating, at ordinary temperature in conformity with JIS Z 2241: 2011 was measured using a tensile testing machine. Formability was evaluated as favorable in the case of an elongation of 3% or more, while formability was evaluated as defective in the case of an elongation of less than 3%.

### [h] Brazeability

A bare fin material subjected to corrugation working was sandwiched between two sample materials as described above and brazed at a temperature equivalent to brazing heating. The rate of bonding between each sample material and the fin material was measured after the brazing. A bonding rate of 90% or more was evaluated as favorable brazeability, while a bonding rate of less than 90% was evaluated as defective brazeability. In addition, it was also observed whether or not erosion was observed in a bond portion between each sample material and the fin material.

### [i] External Corrosion Resistance

A bare fin material subjected to corrugation working was sandwiched between two sample materials as described above and brazed at a temperature equivalent to brazing heating. The potential of a tube brazing filler material surface between the fins of each sample material and the potential of the core material were measured after the brazing. The potential difference between the core material and the brazing filler material interval was measured. A case in which the potential of the core material is higher than that of the brazing filler material was evaluated as "good" (favorable), while a case in which the potential of the core material is 100 mV or more higher than that of the brazing filler material or in which the potential of the core material is lower than that of the brazing filler material was evaluated as "poor" (defective).

### [j] Others

Further, "strength 1 week after brazing", "corrosion resistance", and "formability", similar to the above, of a material clad with no brazing filler material were evaluated. The above evaluation results are set forth in Table 11.

### [Table 11]

**Table 11**

| | | | | | | | | |
|---|---|---|---|---|---|---|---|---|
| | | Core alloy No. | Sacrificial material alloy No. | Sacrificial material alloy No. | Step No. | Strength 1 week after brazing [MPa] | External corrosion resistance | Formability |
| Examples | 80 | 2 | 43 | - | 5 | 283 | Excellent | Favorable |
| | 81 | 2 | 43 | 43 | 5 | 255 | Excellent | Favorable |

In Examples 1 to 81, the conditions set in the present embodiment were satisfied, and all of strength 1 week after brazing, (external) corrosion resistance, formability, and brazeability were acceptable or favorable.

In contrast, in Comparative Example 1, the content of Si in the core material was large, and therefore, corrosion resistance was defective. In addition, the solidus-line temperature of the core material was decreased, and erosion occurred.

In Comparative Example 2, the content of Fe in the core material was small, the density of a crystalline precipitate was therefore decreased, and strength 1 week after brazing was defective.

In Comparative Example 3, the content of Fe in the core material was large, the amount of a coarse crystallized product was therefore increased, and formability was defective.

In Comparative Example 4, the content of Cu in the core material was small, and therefore, the number density of the Al-Mn intermetallic compound in the core material was decreased, thereby resulting in defective strength 1 week after brazing.

In Comparative Example 5, the content of Cu in the core material was large, the amount of Al₂Cu precipitated in a grain boundary was therefore increased, and the corrosion of the grain boundary occurred in an internal corrosion resistance test. In addition, a melting point is decreased, and the erosion of the core material occurred in brazing.

In Comparative Example 6, the content of Mn in the core material was small, the number density of the Al-Mn intermetallic compound in the core material was therefore decreased, and strength 1 week after brazing was defective.

In Comparative Example 7, the content of Mn in the core material was large, the amount of a coarse crystallized product was therefore increased, and formability was defective.

In Comparative Example 8, the content of Mg in the core material was small, and therefore, strength 1 week after brazing was defective.

In Comparative Example 9, the content of Mg in the core material was large, and therefore, brazeability was defective.

In Comparative Example 10, the content of Ti in the core material was large, the amount of a coarse crystallized product was therefore increased, and formability was defective.

In Comparative Example 11, the content of Zr in the core material was large, the amount of a coarse crystallized product was therefore increased, and formability was defective.

In Comparative Example 12, the content of Cr in the core material was large, the amount of a coarse crystallized product was therefore increased, and formability was defective.

In Comparative Example 13, the content of V in the core material was large, the amount of a coarse crystallized product was therefore increased, and formability was defective.

In Comparative Example 14, the content of Si in the sacrificial anode material layer was small, the number density of a Mg-Si-based crystallized product having an equivalent circle diameter of 0.1 to 5.0 µm was therefore decreased, and corrosion resistance was defective. In addition, the amount of Si supplied from the sacrificial anode material to the core material in brazing-equivalent heating was small, and therefore, strength 1 week after brazing was defective.

In Comparative Example 15, the content of Si in the sacrificial anode material layer was large, a part of the sacrificial anode material was therefore melted during production, and it was impossible to produce a clad material.

In Comparative Example 16, the content of Mg in the sacrificial anode material layer was small, the number density of a Mg-Si-based crystallized product having an equivalent circle diameter of 0.1 to 5.0 µm was therefore decreased, and corrosion resistance was defective.

In Comparative Example 17, the content of Mg in the sacrificial anode material layer was large, the sacrificial anode material layer was therefore prevented from being bonded to the core material in hot rolling, and it was impossible to produce a clad material.

In Comparative Example 18, the content of Fe in the sacrificial anode material layer was large, the corrosion rate was therefore increased, and corrosion resistance was defective.

In Comparative Example 19, the content of Ni in the sacrificial anode material layer was large, the corrosion rate was therefore increased, and corrosion resistance was defective.

In Comparative Example 20, the content of Cu in the sacrificial anode material layer was large, the corrosion rate was therefore increased, and corrosion resistance was defective.

In Comparative Example 21, the content of Mn in the sacrificial anode material layer was large, the amount of a coarse crystallized product was therefore increased, and formability was defective.

In Comparative Example 22, the content of Zn in the sacrificial anode material layer was large, a corrosion rate was therefore increased, and corrosion resistance was defective.

In Comparative Example 23, the content of Ti in the sacrificial anode material layer was large, the amount of a coarse crystallized product was therefore increased, and formability was defective.

In Comparative Example 24, the content of Zr in the sacrificial anode material layer was large, the amount of a coarse crystallized product was therefore increased, and formability was defective.

In Comparative Example 25, the content of Cr in the sacrificial anode material layer was large, the amount of a coarse crystallized product was therefore increased, and formability was defective.

In Comparative Example 26, the content of V in the sacrificial anode material layer was large, the amount of a coarse crystallized product was therefore increased, and formability was defective.

In Comparative Example 27, the content of Si in the brazing filler material layer was small, it was therefore impossible to secure a liquid phase rate at 600°C, and brazeability was defective.

In Comparative Example 28, the content of Si in the brazing filler material layer was large, coarse Si particles were therefore increased, and formability was defective.

In Comparative Example 29, the content of Cu in the brazing filler material was large, the potential of a surface of the brazing filler material was therefore higher than the potential of the core material, and external corrosion resistance was defective.

In Comparative Example 30, the content of Zn in the brazing filler material was large, the potential of a fillet was therefore too low, and external corrosion resistance was defective.

In Comparative Example 31, the temperature of the homogenization treatment of the aluminum alloy for the core material was high, the number density of an Al-Mn intermetallic compound in the core material was therefore low, and strength 1 week after brazing was defective.

In Comparative Example 32, a cooling rate in the step of casting the aluminum alloy for the sacrificial anode material layer was low, and therefore, the number density of the Mg-Si-based crystallized product having an equivalent circle diameter of more than 5.0 µm and 10.0 µm or less was increased, whereby corrosion locally concentrated, and corrosion resistance was defective.

In Comparative Example 33, the temperature of the homogenization treatment of the aluminum alloy for the sacrificial anode material layer was low, and therefore, the number density of the Mg-Si-based crystallized product having an equivalent circle diameter of more than 5.0 µm and 10.0 µm or less was increased, whereby corrosion locally concentrated, and corrosion resistance was defective.

In Comparative Example 34, the time of the homogenization treatment of the aluminum alloy for the sacrificial anode material layer was short, and therefore, the number density of the Mg-Si-based crystallized product having an equivalent circle diameter of more than 5.0 µm and 10.0 µm or less was increased, whereby corrosion locally concentrated, and corrosion resistance was defective.

In Comparative Example 35, a heating temperature in the heating stage of the joining heat treatment was low, the number density of the Al-Mn intermetallic compound in the core material was therefore decreased, and strength 1 week after brazing was defective.

In Comparative Example 36, a heating temperature in the heating stage of the joining heat treatment was high, the number density of the Al-Mn intermetallic compound in the core material was therefore decreased, and strength 1 week after brazing was defective.

In Comparative Example 37, a retention time in the retention stage of the joining heat treatment was long, the number density of Al₂Cu in the core material was therefore increased, strength 1 week after brazing was defective, and formability was also defective.

In Comparative Example 38, an annealing temperature of in final annealing was high, the number density of Al₂Cu in the core material was therefore increased, strength 1 week after brazing was defective, and formability was also defective.

The foregoing describes some example embodiments for explanatory purposes. Although the foregoing discussion has presented specific embodiments, persons skilled in the art will recognize that changes may be made in form and detail without departing from the scope of the invention. Accordingly, the specification and drawings are to be regarded in an illustrative rather than a restrictive sense.

### Industrial Applicability

According to the present disclosure, an aluminum alloy clad material that has high strength and excellent corrosion resistance and can be brazed at a temperature of around 600°C can be provided, as described above.

### Reference Signs List

- 1: Tube
- 2: Fin
- 3: Header
- 4: Tank

## Claims

1. An aluminum alloy clad material comprising: a core material comprising an aluminum alloy; and a sacrificial anode material layer clad on one surface or both surfaces of the core material, wherein
the core material comprises an aluminum alloy comprising more than 0 mass% and less than 0.2 mass% Si, 0.05 to 0.30 mass% Fe, 1.0 to 2.5 mass% Cu, 1.0 to 1.6 mass% Mn, 0.1 to 1.0 mass% Mg, and optionally one or more selected from a group consisting of 0.05 to 0.20 mass% Ti, 0.05 to 0.20 mass% Zr, 0.05 to 0.20 mass% Cr, 0.05 to 0.20 mass% V, and less than or equal to 0.05 mass% B, with a balance of Al and inevitable impurities;
the sacrificial anode material layer comprises an aluminum alloy comprising 0.1 to 1.5 mass% Si, 0.1 to 2.0 mass% Mg, and optionally one or more selected from a group consisting of 0.05 to 1.00 mass% Fe, 0.05 to 1.00 mass% Ni, 0.05 to 1.00 mass% Cu, 0.05 to 1.50 mass% Mn, 0.05 to 1.00 mass% Zn, 0.05 to 0.20 mass% Ti, 0.05 to 0.30 mass% Zr, 0.05 to 0.30 mass% Cr, and 0.05 to 0.30 mass% V, with a balance of Al and inevitable impurities;
in the core material, a number density of an Al-Mn-based intermetallic compound having an equivalent circle diameter of 0.1 µm or more is 1.0 × 10⁵ particles /mm² or more, and a number density of Al₂Cu having an equivalent circle diameter of 0.1 µm or more is 1.0 × 10⁵ particles /mm² or less; and
in the sacrificial anode material layer, a number density of a Mg-Si-based crystallized product having an equivalent circle diameter of 0.1 to 5.0 µm is 100 to 150,000 particles /mm², and a number density of a Mg-Si-based crystallized product having an equivalent circle diameter of more than 5.0 µm and 10.0 µm or less is 5 particles /mm² or less.

2. A method for producing the aluminum alloy clad material according to claim 1, the method comprising:
a casting step of casting each of the aluminum alloy for the core material and the aluminum alloy for the sacrificial anode material layer; a homogenization treatment step of performing homogenization treatment of a cast ingot of the sacrificial anode material layer; a hot-rolling step of hot-rolling the ingot of the sacrificial anode material layer, subjected to the homogenization treatment, to have a predetermined thickness; a joining step of combining one surface or both surfaces of a core material ingot with the sacrificial anode material layer allowed to have the predetermined thickness by the hot rolling to form a joined material; a joining heating step of heating the joined material; a hot clad rolling step of hot-rolling the heated joined material; and a cold-rolling step of cold-rolling the hot-clad-rolled clad material,
wherein a rate of cooling an ingot surface by semi-continuous casting is set to 1°C/s or more in the step of casting the aluminum alloy for the sacrificial anode material layer; in the step of performing the homogenization treatment of the ingot of the sacrificial anode material layer, heat treatment of the ingot is performed at a temperature of 450 to 570°C for 1 hour or more; a heating temperature in the joining heating step is 420 to 550°C; and a retention time at 320 to 400°C is 6 minutes or less after the joining heating step.

3. The method for producing an aluminum alloy clad material according to claim 2, the method further comprising a homogenization treatment step of performing homogenization treatment of an ingot of the core material after the step of casting the core material, wherein heat treatment of the ingot of the core material is performed at a temperature of 400 to 550°C in the homogenization treatment step.

4. The method for producing an aluminum alloy clad material according to claim 2 or 3, the method further comprising one or more annealing steps of annealing the clad material during or after the cold-rolling step, or during and after the cold-rolling step, wherein heat treatment of the clad material is performed at a temperature of 200 to 320°C in the annealing steps.

5. An aluminum alloy clad material comprising: a core material comprising an aluminum alloy; a sacrificial anode material layer clad on one surface of the core material; and a brazing filler material clad on another surface of the core material, wherein
the core material comprises an aluminum alloy comprising more than 0 mass% and less than 0.2 mass% Si, 0.05 to 0.30 mass% Fe, 1.0 to 2.5 mass% Cu, 1.0 to 1.6 mass% Mn, 0.1 to 1.0 mass% Mg, and optionally one or more selected from a group consisting of 0.05 to 0.20 mass% Ti, 0.05 to 0.20 mass% Zr, 0.05 to 0.20 mass% Cr, 0.05 to 0.20 mass% V, and less than or equal to 0.05 mass% B, with a balance of Al and inevitable impurities;
the sacrificial anode material layer comprises an aluminum alloy comprising 0.1 to 1.5 mass% Si, 0.1 to 2.0 mass% Mg, and optionally one or more selected from a group consisting of 0.05 to 1.00 mass% Fe, 0.05 to 1.00 mass% Ni, 0.05 to 1.00 mass% Cu, 0.05 to 1.50 mass% Mn, 0.05 to 1.00 mass% Zn, 0.05 to 0.20 mass% Ti, 0.05 to 0.30 mass% Zr, 0.05 to 0.30 mass% Cr, and 0.05 to 0.30 mass% V, with a balance of Al and inevitable impurities;
the brazing filler material comprises an Al-Si-based alloy comprising 7.0 to 12.0 mass% Si with a balance of Al and inevitable impurities, an Al-Si-Cu-based alloy further comprising 0.5 to 2.5 mass% Cu, or an Al-Si-Cu-Zn-based alloy further comprising 0.1 to 3.0 mass% Zn;
in the core material, a number density of an Al-Mn-based intermetallic compound having an equivalent circle diameter of 0.1 µm or more is 1.0 × 10⁵ particles /mm² or more, and a number density of Al₂Cu having an equivalent circle diameter of 0.1 µm or more is 1.0 × 10⁵ particles /mm² or less; and
in the sacrificial anode material layer, a number density of a Mg-Si-based crystallized product having an equivalent circle diameter of 0.1 to 5.0 µm is 100 to 150,000 particles /mm², and a number density of a Mg-Si-based crystallized product having an equivalent circle diameter of more than 5.0 µm and 10.0 µm or less is 5 particles /mm² or less.

6. A method for producing the aluminum alloy clad material according to claim 5, the method comprising:
a casting step of casting each of the aluminum alloy for the core material, the aluminum alloy for the sacrificial anode material layer, and the aluminum alloy for the brazing filler material; a homogenization treatment step of performing homogenization treatment of a cast ingot of the sacrificial anode material layer; a hot-rolling step of hot-rolling each of the ingot of the sacrificial anode material layer, subjected to the homogenization treatment, and an ingot of the brazing filler material to have a predetermined thickness; a joining step of combining each of one surface of a core material ingot with the sacrificial anode material layer allowed to have the predetermined thickness by the hot rolling and another surface of the core material ingot with the brazing filler material allowed to have the predetermined thickness by the hot rolling to form a joined material; a joining heating step of heating the joined material; a hot clad rolling step of hot-rolling the heated joined material; and a cold-rolling step of cold-rolling the hot-clad-rolled clad material,
wherein a rate of cooling an ingot surface by semi-continuous casting is set to 1°C/s or more in the step of casting the aluminum alloy for the sacrificial anode material layer; in the step of performing the homogenization treatment of the ingot of the sacrificial anode material layer, heat treatment of the ingot is performed at a temperature of 450 to 570°C for 1 hour or more; a heating temperature in the joining heating step is 420 to 550°C; and a retention time at 320 to 400°C is 6 minutes or less after the joining heating step.

7. The method for producing an aluminum alloy clad material according to claim 6, the method further comprising a homogenization treatment step of performing homogenization treatment of an ingot of the core material after the step of casting the core material, wherein heat treatment of the ingot of the core material is performed at a temperature of 400 to 550°C in the homogenization treatment step.

8. The method for producing an aluminum alloy clad material according to claim 6 or 7, the method further comprising one or more annealing steps of annealing the clad material during or after the cold-rolling step, or during and after the cold-rolling step, wherein heat treatment of the clad material is performed at a temperature of 200 to 320°C in the annealing steps.

## Patentansprüche

1. Plattierter Aluminiumlegierungswerkstoff, umfassend:
einen Kernwerkstoff, der eine Aluminiumlegierung umfasst; und
eine Opferanodenwerkstoffschicht als Plattierung auf einer Oberfläche oder beiden Oberflächen des Kernwerkstoffs,
wobei der Kernwerkstoff eine Aluminiumlegierung umfasst, die mehr als 0 Masse% und weniger als 0,2 Masse% Si, 0,05 bis 0,30 Masse% Fe, 1,0 bis 2,5 Masse% Cu, 1,0 bis 1,6 Masse% Mn, 0,1 bis 1,0 Masse% Mg und optional mindestens einen Bestandteil, ausgewählt aus einer Gruppe, die aus 0,05 bis 0,20 Masse% Ti, 0,05 bis 0,20 Masse% Zr, 0,05 bis 0,20 Masse% Cr, 0,05 bis 0,20 Masse% V und weniger als oder gleich 0,05 Masse% B besteht, umfasst, wobei der Rest aus Al sowie unvermeidbaren Verunreinigungen besteht;
wobei die Opferanodenwerkstoffschicht eine Aluminiumlegierung umfasst, die 0,1 bis 1,5 Masse% Si, 0,1 bis 2,0 Masse% Mg, und optional mindestens einen Bestandteil, ausgewählt aus einer Gruppe, die aus 0,05 bis 1,00 Masse% Fe, 0,05 bis 1,00 Masse% Ni, 0,05 bis 1,00 Masse% Cu, 0,05 bis 1,50 Masse% Mn, 0,05 bis 1,00 Masse% Zn, 0,05 bis 0,20 Masse% Ti, 0,05 bis 0,30 Masse% Zr, 0,05 bis 0,30 Masse% Cr, und 0,05 bis 0,30 Masse% V besteht, umfasst, wobei der Rest aus Al sowie unvermeidbaren Verunreinigungen besteht;
wobei im Kernwerkstoff eine Anzahldichte einer Al-Mn-basierten intermetallischen Verbindung mit einem kreisäquivalenten Durchmesser von mindestens 0,1 µin 1,0 x 10⁵ Partikel/mm² oder mehr beträgt, und eine Anzahldichte von Al₂Cu mit einem kreisäquivalenten Durchmesser von mindestens 0,1 µm 1,0 x 10⁵ Partikel/mm² oder weniger beträgt; und
wobei in der Opferanodenwerkstoffschicht eine Anzahldichte eines Mg-Si-basierten kristallinen Produkts mit einem kreisäquivalenten Durchmesser von 0,1 bis 5,0 µm 100 bis 150000 Partikel/mm² beträgt und eine Anzahldichte eines Mg-Si-basierten kristallinen Produkts mit einem kreisäquivalenten Durchmesser von mehr als 5,0 µm und 10,0 µm oder weniger 5 Partikel/mm² oder weniger beträgt.

2. Verfahren zur Herstellung des plattierten Aluminiumlegierungswerkstoffs gemäß Anspruch 1, wobei das Verfahren umfasst:
einen Gießschritt zum jeweiligen Gießen der Aluminiumlegierung für den Kernwerkstoff und der Aluminiumlegierung für die Opferanodenwerkstoffschicht;
einen Homogenisierungsbehandlungsschritt zur Durchführung einer Homogenisierungsbehandlung eines gegossenen Barrens der Opferanodenwerkstoffschicht;
einen Warmwalzschritt zum Warmwalzen des Barrens der Opferanodenwerkstoffschicht, welcher der Homogenisierungsbehandlung unterworfen wurde, auf eine vorbestimmte Dicke;
einen Verbindungsschritt der Kombination einer Oberfläche oder beider Oberflächen eines Barrens des Kernwerkstoffs mit der Opferanodenwerkstoffschicht, welcher das Erhalten der vorbestimmten Dicke durch das Warmwalzen erlaubt wurde, um einen Verbundwerkstoff zu bilden;
einen Verbunderwärmungsschritt zur Erwärmung des Verbundwerkstoffs;
einen Warmwalzschritt zum Warmwalzen des erwärmten Verbundwerkstoffs; und
einen Kaltwalzschritt zum Kaltwalzen des warmgewalzten plattierten Werkstoffs;
wobei im Schritt des Gießens der Aluminiumlegierung für die Opferanodenwerkstoffschicht eine Rate der Abkühlung einer Barrenoberfläche durch halb-kontinuierliches Gießen auf 1°C/s oder mehr eingestellt wird; im Schritt der Durchführung der Homogenisierungsbehandlung des Barrens der Opferanodenwerkstoffschicht die Wärmebehandlung des Barrens bei einer Temperatur von 450 bis 570°C für eine Stunde oder mehr durchgeführt wird; eine Erwärmungstemperatur in dem Verbunderwärmungsschritt 420 bis 550°C beträgt; und eine Retentionszeit bei 320 bis 400°C nach dem Verbunderwärmungsschritt 6 Minuten oder weniger beträgt.

3. Verfahren zur Herstellung eines plattierten Aluminiumlegierungswerkstoffs gemäß Anspruch 2, wobei das Verfahren ferner umfasst:
einen Homogenisierungsbehandlungsschritt zur Durchführung einer Homogenisierungsbehandlung eines Barrens des Kernwerkstoffs nach dem Schritt des Gießens des Kernwerkstoffs; wobei eine Wärmebehandlung des Barrens des Kernwerkstoffs bei einer Temperatur von 450 bis 550°C in dem Homogenisierungsbehandlungsschritt durchgeführt wird.

4. Verfahren zur Herstellung eines plattierten Aluminiumlegierungswerkstoffs gemäß Anspruch 2 oder 3, wobei das Verfahren ferner einen oder mehrere Temperungsschritte zur Temperung des plattierten Werkstoffs während oder nach dem Kaltwalzschritt oder während und nach dem Kaltwalzschritt umfasst, wobei eine Wärmebehandlung des plattierten Werkstoffs bei einer Temperatur von 200 bis 320°C in den Temperungsschritten durchgeführt wird.

5. Plattierter Aluminiumlegierungswerkstoff, umfassend:
einen Kernwerkstoff, der eine Aluminiumlegierung umfasst;
eine Opferanodenwerkstoffschicht als Plattierung auf einer Oberfläche des Kernwerkstoffs;
und einen Hartlot-Zusatzwerkstoff als Plattierung auf einer anderen Oberfläche des Kernwerkstoffs,
wobei der Kernwerkstoff eine Aluminiumlegierung umfasst, die mehr als 0 Masse% und weniger als 0,2 Masse% Si, 0,05 bis 0,30 Masse% Fe, 1,0 bis 2,5 Masse% Cu, 1,0 bis 1,6 Masse% Mn, 0,1 bis 1,0 Masse% Mg und optional mindestens einen Bestandteil, ausgewählt aus einer Gruppe, die aus 0,05 bis 0,20 Masse% Ti, 0,05 bis 0,20 Masse% Zr, 0,05 bis 0,20 Masse% Cr, 0,05 bis 0,20 Masse% V und weniger als oder gleich 0,05 Masse% B besteht, umfasst, wobei der Rest aus Al sowie unvermeidbaren Verunreinigungen besteht;
wobei die Opferanodenwerkstoffschicht eine Aluminiumlegierung umfasst, die 0,1 bis 1,5 Masse% Si, 0,1 bis 2,0 Masse% Mg, und optional mindestens einen Bestandteil, ausgewählt aus einer Gruppe, die aus 0,05 bis 1,00 Masse% Fe, 0,05 bis 1,00 Masse% Ni, 0,05 bis 1,00 Masse% Cu, 0,05 bis 1,50 Masse% Mn, 0,05 bis 1,00 Masse% Zn, 0,05 bis 0,20 Masse% Ti, 0,05 bis 0,30 Masse% Zr, 0,05 bis 0,30 Masse% Cr, und 0,05 bis 0,30 Masse% V besteht, umfasst, wobei der Rest aus Al sowie unvermeidbaren Verunreinigungen besteht;
wobei der Hartlot-Zusatzwerkstoff umfasst eine Al-Si-basierte Legierung, die 7,0 bis 12,0 Masse% Si umfasst, wobei der Rest aus Al sowie unvermeidbaren Verunreinigungen besteht, eine Al-Si-Cu-basierte Legierung, die ferner 0,5 bis 2,5 Masse% Cu umfasst, oder eine Al-Si-Cu-Zn-basierte Legierung, die ferner 0,1 bis 3,0 Masse% Zn umfasst;
wobei im Kernwerkstoff eine Anzahldichte einer Al-Mn-basierten intermetallischen Verbindung mit einem kreisäquivalenten Durchmesser von mindestens 0,1 µm 1,0 x 10⁵ Partikel/mm² oder mehr beträgt, und eine Anzahldichte von Al₂Cu mit einem kreisäquivalenten Durchmesser von mindestens 0,1 µm 1,0 x 10⁵ Partikel/mm² oder weniger beträgt; und
wobei in der Opferanodenwerkstoffschicht eine Anzahldichte eines Mg-Si-basierten kristallinen Produkts mit einem kreisäquivalenten Durchmesser von 0,1 bis 5,0 µm 100 bis 150000 Partikel/mm² beträgt und eine Anzahldichte eines Mg-Si-basierten kristallinen Produkts mit einem kreisäquivalenten Durchmesser von mehr als 5,0 µm und 10,0 µm oder weniger 5 Partikel/mm² oder weniger beträgt.

6. Verfahren zur Herstellung des plattierten Aluminiumlegierungswerkstoffs gemäß Anspruch 5, wobei das Verfahren umfasst:
einen Gießschritt zum jeweiligen Gießen der Aluminiumlegierung für den Kernwerkstoff, der Aluminiumlegierung für die Opferanodenwerkstoffschicht und der Aluminiumlegierung für den Hartlot-Zusatzwerkstoff;
einen Homogenisierungsbehandlungsschritt zur Durchführung einer Homogenisierungsbehandlung eines gegossenen Barrens der Opferanodenwerkstoffschicht;
einen Warmwalzschritt zum jeweiligen Warmwalzen des Barrens der Opferanodenwerkstoffschicht, welcher der Homogenisierungsbehandlung unterworfen wurde, und eines Barrens des Hartlot-Zusatzwerkstoffs auf eine vorbestimmte Dicke;
einen Verbindungsschritt der jeweiligen Kombination einer Oberfläche eines Barrens des Kernwerkstoffs mit der Opferanodenwerkstoffschicht, welcher das Erhalten der vorbestimmten Dicke durch das Warmwalzen erlaubt wurde, und einer anderen Oberfläche des Barrens des Kernwerkstoffs mit dem Hartlot-Zusatzwerkstoff, welchem das Erhalten der vorbestimmten Dicke durch das Warmwalzen erlaubt wurde, um einen Verbundwerkstoff zu bilden;
einen Verbunderwärmungsschritt zur Erwärmung des Verbundwerkstoffs;
einen Warmwalzschritt zum Warmwalzen des erwärmten Verbundwerkstoffs; und
einen Kaltwalzschritt zum Kaltwalzen des warmgewalzten plattierten Werkstoffs;
wobei im Schritt des Gießens der Aluminiumlegierung für die Opferanodenwerkstoffschicht eine Rate der Abkühlung einer Barrenoberfläche durch halb-kontinuierliches Gießen auf 1°C/s oder mehr eingestellt wird; im Schritt der Durchführung der Homogenisierungsbehandlung des Barrens der Opferanodenwerkstoffschicht die Wärmebehandlung des Barrens bei einer Temperatur von 450 bis 570°C für eine Stunde oder mehr durchgeführt wird; eine Erwärmungstemperatur in dem Verbunderwärmungsschritt 420 bis 550°C beträgt;
und eine Retentionszeit bei 320 bis 400°C nach dem Verbunderwärmungsschritt 6 Minuten oder weniger beträgt.

7. Verfahren zur Herstellung eines plattierten Aluminiumlegierungswerkstoffs gemäß Anspruch 6, wobei das Verfahren ferner umfasst:
einen Homogenisierungsbehandlungsschritt zur Durchführung einer Homogenisierungsbehandlung eines Barrens des Kernwerkstoffs nach dem Schritt des Gießens der Kernwerkstoffs; wobei eine Wärmebehandlung des Barrens des Kernwerkstoffs bei einer Temperatur von 450 bis 550°C in dem Homogenisierungsbehandlungsschritt durchgeführt wird.

8. Verfahren zur Herstellung eines plattierten Aluminiumlegierungswerkstoffs gemäß Anspruch 6 oder 7, wobei das Verfahren ferner einen oder mehrere Temperungsschritte zur Temperung des plattierten Werkstoffs während oder nach dem Kaltwalzschritt oder während und nach dem Kaltwalzschritt umfasst, wobei eine Wärmebehandlung des plattierten Werkstoffs bei einer Temperatur von 200 bis 320°C in den Temperungsschritten durchgeführt wird.

## Revendications

1. Matériau revêtu d'alliage d'aluminium comprenant : un matériau d'âme comprenant un alliage d'aluminium ; et une couche de matériau d'anode sacrificielle revêtue sur une surface ou les deux surfaces du matériau d'âme, dans lequel
le matériau d'âme comprend un alliage d'aluminium comprenant plus de 0 % en masse et moins de 0,2 % en masse de Si, 0,05 à 0,30 % en masse de Fe, 1,0 à 2,5 % en masse de Cu, 1,0 à 1,6 % en masse de Mn, 0,1 à 1,0 % en masse de Mg, et facultativement un ou plusieurs éléments choisis dans un groupe consistant en 0,05 à 0,20 % en masse de Ti, 0,05 à 0,20 % en masse de Zr, 0,05 à 0,20 % en masse de Cr, 0,05 à 0,20 % en masse de V, et une quantité inférieure ou égale à 0,05 % en masse de B, avec un reste d'Al et d'impuretés inévitables ;
la couche de matériau d'anode sacrificielle comprend un alliage d'aluminium comprenant 0,1 à 1,5 % en masse de Si, 0,1 à 2,0 % en masse de Mg, et facultativement un ou plusieurs éléments choisis dans un groupe consistant en 0,05 à 1,00 % en masse de Fe, 0,05 à 1,00 % en masse de Ni, 0,05 à 1,00 % en masse de Cu, 0,05 à 1,50 % en masse de Mn, 0,05 à 1,00 % en masse de Zn, 0,05 à 0,20 % en masse de Ti, 0,05 à 0,30 % en masse de Zr, 0,05 à 0,30 % en masse de Cr, et 0,05 à 0,30 % en masse de V, avec un reste d'Al et d'impuretés inévitables ;
dans le matériau d'âme, une densité en nombre d'un composé intermétallique à base d'Al-Mn ayant un diamètre de cercle équivalent de 0,1 µm ou plus est de 1,0 x 10⁵ particules/mm² ou plus, et une densité en nombre d'Al₂Cu ayant un diamètre de cercle équivalent de 0,1 µm ou plus est de 1,0 x 10⁵ particules/mm² ou moins ; et
dans la couche de matériau d'anode sacrificielle, une densité en nombre d'un produit cristallisé à base de Mg-Si ayant un diamètre de cercle équivalent de 0,1 à 5,0 µm est de 100 à 150 000 particules/mm², et une densité en nombre d'un produit cristallisé à base de Mg-Si ayant un diamètre de cercle équivalent de plus de 5,0 µm et 10,0 µm ou moins est de 5 particules/mm² ou moins.

2. Procédé de production du matériau revêtu d'alliage d'aluminium selon la revendication 1, le procédé comprenant :
une étape de coulée consistant à couler chacun de l'alliage d'aluminium pour le matériau d'âme et de l'alliage d'aluminium pour la couche de matériau d'anode sacrificielle ; une étape de traitement d'homogénéisation consistant à réaliser un traitement d'homogénéisation d'un lingot coulé de la couche de matériau d'anode sacrificielle ; une étape de laminage à chaud consistant à laminer à chaud le lingot de la couche de matériau d'anode sacrificielle, soumis au traitement d'homogénéisation, pour avoir une épaisseur prédéterminée ; une étape d'assemblage consistant à combiner une surface ou les deux surfaces d'un lingot de matériau d'âme avec la couche de matériau d'anode sacrificielle autorisée à avoir l'épaisseur prédéterminée par le laminage à chaud pour former un matériau assemblé ; une étape de chauffage d'assemblage consistant à chauffer le matériau assemblé ; une étape de laminage revêtu à chaud consistant à laminer à chaud le matériau assemblé et chauffé ; et une étape de laminage à froid consistant à laminer à froid le matériau revêtu et laminé revêtu à chaud,
dans lequel une vitesse de refroidissement d'une surface de lingot par coulée semi-continue est fixée à 1 °C/s ou plus à l'étape de coulée de l'alliage d'aluminium pour la couche de matériau d'anode sacrificielle ; à l'étape de réalisation du traitement d'homogénéisation du lingot de la couche de matériau d'anode sacrificielle, un traitement thermique du lingot est réalisé à une température de 450 à 570 °C pendant 1 heure ou plus ; une température de chauffage à l'étape de chauffage d'assemblage est de 420 à 550 °C ; et un temps de rétention à 320 à 400 °C est de 6 minutes ou moins après l'étape de chauffage d'assemblage.

3. Procédé de production d'un matériau revêtu d'alliage d'aluminium selon la revendication 2, le procédé comprenant en outre une étape de traitement d'homogénéisation consistant à réaliser un traitement d'homogénéisation d'un lingot du matériau d'âme après l'étape de coulée du matériau d'âme, dans lequel le traitement thermique du lingot du matériau d'âme est réalisé à une température de 400 à 550 °C à l'étape de traitement d'homogénéisation.

4. Procédé de production d'un matériau revêtu d'alliage d'aluminium selon la revendication 2 ou 3, le procédé comprenant en outre une ou plusieurs étapes de recuit consistant à recuire le matériau revêtu pendant ou après l'étape de laminage à froid, ou pendant et après l'étape de laminage à froid, dans lequel le traitement thermique du matériau revêtu est réalisé à une température de 200 à 320 °C aux étapes de recuit.

5. Matériau revêtu d'alliage d'aluminium comprenant : un matériau d'âme comprenant un alliage d'aluminium ; une couche de matériau d'anode sacrificielle revêtue sur une surface du matériau d'âme ; et un matériau d'apport pour brasage revêtu sur une autre surface du matériau d'âme, dans lequel
le matériau d'âme comprend un alliage d'aluminium comprenant plus de 0 % en masse et moins de 0,2 % en masse de Si, 0,05 à 0,30 % en masse de Fe, 1,0 à 2,5 % en masse de Cu, 1,0 à 1,6 % en masse de Mn, 0,1 à 1,0 % en masse de Mg, et facultativement un ou plusieurs éléments choisis dans un groupe consistant en 0,05 à 0,20 % en masse de Ti, 0,05 à 0,20 % en masse de Zr, 0,05 à 0,20 % en masse de Cr, 0,05 à 0,20 % en masse de V, et une quantité inférieure ou égale à 0,05 % en masse de B, avec un reste d'Al et d'impuretés inévitables ;
la couche de matériau d'anode sacrificielle comprend un alliage d'aluminium comprenant 0,1 à 1,5 % en masse de Si, 0,1 à 2,0 % en masse de Mg, et facultativement un ou plusieurs éléments choisis dans un groupe consistant en 0,05 à 1,00 % en masse de Fe, 0,05 à 1,00 % en masse de Ni, 0,05 à 1,00 % en masse de Cu, 0,05 à 1,50 % en masse de Mn, 0,05 à 1,00 % en masse de Zn, 0,05 à 0,20 % en masse de Ti, 0,05 à 0,30 % en masse de Zr, 0,05 à 0,30 % en masse de Cr, et 0,05 à 0,30 % en masse de V, avec un reste d'Al et d'impuretés inévitables ;
le matériau d'apport pour brasage comprend un matériau à base d'Al-Si comprenant 7,0 à 12,0 % en masse de Si avec un reste d'Al et d'impuretés inévitables, un alliage à base d'Al-Si-Cu comprenant en outre 0,5 à 2,5 % en masse de Cu, ou un alliage à base d'Al-Si-Cu-Zn comprenant en outre 0,1 à 3,0 % en masse de Zn ;
dans le matériau d'âme, une densité en nombre d'un composé intermétallique à base d'Al-Mn ayant un diamètre de cercle équivalent de 0,1 µm ou plus est de 1,0 x 10⁵ particules/mm² ou plus, et une densité en nombre d'Al₂Cu ayant un diamètre de cercle équivalent de 0,1 µm ou plus est de 1,0 x 10⁵ particules/mm² ou moins ; et
dans la couche de matériau d'anode sacrificielle, une densité en nombre d'un produit cristallisé à base de Mg-Si ayant un diamètre de cercle équivalent de 0,1 à 5,0 µm est de 100 à 150 000 particules/mm², et une densité en nombre d'un produit cristallisé à base de Mg-Si ayant un diamètre de cercle équivalent de plus de 5,0 µm et 10,0 µm ou moins est de 5 particules/mm² ou moins.

6. Procédé de production du matériau revêtu d'alliage d'aluminium selon la revendication 5, le procédé comprenant :
une étape de coulée consistant à couler chacun de l'alliage d'aluminium pour le matériau d'âme, de l'alliage d'aluminium pour la couche de matériau d'anode sacrificielle, et de l'alliage d'aluminium pour le matériau d'apport pour brasage ; une étape de traitement d'homogénéisation consistant à réaliser un traitement d'homogénéisation d'un lingot coulé de la couche de matériau d'anode sacrificielle ; une étape de laminage à chaud consistant à laminer à chaud chacun du lingot de la couche de matériau d'anode sacrificielle, soumise au traitement d'homogénéisation, et d'un lingot du matériau d'apport pour brasage pour avoir une épaisseur prédéterminée ; une étape d'assemblage consistant à combiner chacune d'une surface d'un lingot de matériau d'âme avec la couche de matériau d'anode sacrificielle autorisée à avoir l'épaisseur prédéterminée par le laminage à chaud et d'une autre surface du lingot de matériau d'âme avec le matériau d'apport pour brasage autorisé à avoir l'épaisseur prédéterminée par le laminage à chaud pour former un matériau assemblé ; une étape de chauffage d'assemblage consistant à chauffer le matériau assemblé ; une étape de laminage revêtu à chaud consistant à laminer à chaud le matériau assemblé et chauffé ; et une étape de laminage à froid consistant à laminer à froid le matériau revêtu et laminé revêtu à chaud,
dans lequel une vitesse de refroidissement d'une surface de lingot par coulée semi-continue est fixée à 1 °C/s ou plus à l'étape de coulée de l'alliage d'aluminium pour la couche de matériau d'anode sacrificielle ; à l'étape de réalisation du traitement d'homogénéisation du lingot de la couche de matériau d'anode sacrificielle, un traitement thermique du lingot est réalisé à une température de 450 à 570 °C pendant 1 heure ou plus ; une température de chauffage à l'étape de chauffage d'assemblage est de 420 à 550 °C ; et un temps de rétention à 320 à 400 °C est de 6 minutes ou moins après l'étape de chauffage d'assemblage.

7. Procédé de production d'un matériau revêtu d'alliage d'aluminium selon la revendication 6, le procédé comprenant en outre une étape de traitement d'homogénéisation consistant à réaliser un traitement d'homogénéisation d'un lingot du matériau d'âme après l'étape de coulée du matériau d'âme, dans lequel le traitement thermique du lingot du matériau d'âme est réalisé à une température de 400 à 550 °C à l'étape de traitement d'homogénéisation.

8. Procédé de production d'un matériau revêtu d'alliage d'aluminium selon la revendication 6 ou 7, le procédé comprenant en outre une ou plusieurs étapes de recuit consistant à recuire le matériau revêtu pendant ou après l'étape de laminage à froid, ou pendant et après l'étape de laminage à froid, dans lequel le traitement thermique du matériau revêtu est réalisé à une température de 200 à 320 °C aux étapes de recuit.
